(19) Europäisches Patentamt
European Patent Office
Office européen des brevets

(11) **EP 4 403 857 A1**

(12) **EUROPEAN PATENT APPLICATION**
published in accordance with Art. 153(4) EPC

(43) Date of publication:
**24.07.2024 Bulletin 2024/30**

(21) Application number: **23740409.0**

(22) Date of filing: **09.01.2023**

(51) International Patent Classification (IPC):
**F25D 29/00** (2006.01)   **F25D 23/12** (2006.01)
**F25D 17/06** (2006.01)   **A23B 4/037** (2006.01)
**A23B 4/06** (2006.01)   **G06Q 10/08** (2024.01)
**G06Q 50/10** (2012.01)

(52) Cooperative Patent Classification (CPC):
**A23B 4/037; A23B 4/06; F25D 17/06; F25D 23/12;
F25D 29/00; G06Q 10/08; G06Q 50/10**

(86) International application number:
**PCT/KR2023/000364**

(87) International publication number:
**WO 2023/136565 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2022 KR 20220004734**

(71) Applicant: **Samsung Electronics Co., Ltd.**
**Suwon-si, Gyeonggi-do 16677 (KR)**

(72) Inventors:
• **MIN, Deulre**
**Suwon-si, Gyeonggi-do 16677 (KR)**

• **LEE, Jooyong**
**Suwon-si, Gyeonggi-do 16677 (KR)**
• **BAE, Ilsung**
**Suwon-si, Gyeonggi-do 16677 (KR)**
• **SEO, Jungeun**
**Suwon-si, Gyeonggi-do 16677 (KR)**
• **SONG, Joohee**
**Suwon-si, Gyeonggi-do 16677 (KR)**
• **WEE, Hoon**
**Suwon-si, Gyeonggi-do 16677 (KR)**

(74) Representative: **Walaski, Jan Filip et al**
**Venner Shipley LLP**
**200 Aldersgate**
**London EC1A 4HD (GB)**

(54) **REFRIGERATOR HAVING MEAT AGING FUNCTION, AND CONTROL METHOD THEREFOR**

(57) A control method of a refrigerator is provided. The control method includes obtaining identification information of a meat product. The control method also includes obtaining slaughter date information of the meat, based on the identification information of the meat product. The control method also includes obtaining part information of meat product. The control method also includes generating aging information including an aging level for each aging period of the meat, based on the obtained slaughter date information and the obtained part information. The control method also includes outputting the aging information. The control method also includes aging the meat at a set temperature and a set humidity.

FIG. 1

| AGING INFORMATION | |
|---|---|
| AGING DATE | AGING LEVEL |
| 21.8/26~21.9/2 | ☆ |
| 21.9/3~21.9/9 | ☆☆ |
| 21.9/10~21.9/16 | ☆☆☆ |

**Description**

### TECHNICAL FIELD

The disclosure relates to a refrigerator having a meat aging function, a refrigerator control method, and a computer-readable recording medium storing a computer program for performing the refrigerator control method.

### BACKGROUND ART

Refrigerators may age meat product by controlling the temperature and humidity conditions in a compartment of a refrigerator. However, when meat is aged in a refrigerator regardless of the characteristics of the meat product, the quality of the meat product after aging is changed. Current refrigerators do not have a method for identifying the characteristics of meat product. Because current refrigerators do not have information on factors that control the aging of the meat product, it is difficult to constantly age the meat product to a predetermined quality or higher.

The above information is presented as background information only to assist with an understanding of the disclosure. No determination has been made, and no assertion is made, as to whether any of the above might be applicable as prior art with regard to the disclosure.

### DESCRIPTION OF EMBODIMENTS

### TECHNICAL SOLUTION TO PROBLEM

Aspects of the disclosure are to address at least the above-mentioned problems and/or disadvantages and to provide at least the advantages described below. Accordingly, aspect of the disclosure is to provide a refrigerator with meat aging function and method of controlling the refrigerator.

Additional aspects will be set forth in part in the description which follows and, in part, will be apparent from the description, or may be learned by practice of the presented embodiments.

In accordance with an aspect of the disclosure, a control method of a refrigerator is provided. The control method includes obtaining identification information of meat product. The control method also includes obtaining slaughter date information of the meat product, based on the identification information of the meat product. The control method also includes obtaining part information of meat product. The control method also includes generating aging information including an aging level for each aging period of the meat product, based on the obtained slaughter date information and the obtained part information. The control method also includes outputting the aging information. The control method also includes aging the meat product at a set temperature and a set humidity.

In accordance with an aspect of the disclosure, a refrigerator is provided. The refrigerator includes an aging chamber included in a refrigerating chamber. The refrigerator also includes a temperature control module configured to control a temperature of the aging chamber. The refrigerator also includes a humidity control module configured to control a humidity of the aging chamber, and a communication module. The refrigerator also includes a memory storing at least one instruction. The refrigerator also includes at least one processor connected to the memory. The at least one processor is configured to execute the at least one instruction to obtain identification information of meat product, obtain slaughter date information of the meat product, based on the identification information of the meat product, obtain part information of the meat product, generate aging information including an aging level for each aging period of the meat product, based on the obtained slaughter date information and the obtained part information, output the aging information, and age the meat product at a set temperature and a set humidity.

An aspect of the disclosure is to provide a non-transitory computer-readable recording medium having recorded thereon a computer program, which, when executed by a computer, performs the control method.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF DRAWINGS

The above and other aspects, features, and advantages of certain embodiments of the disclosure will be more apparent from the following description taken in conjunction with the accompanying drawings, in which:

FIG. 1 illustrates a structure of a refrigerator, an external device, and a meat information server, according to an embodiment of the disclosure;

FIG. 2 is a block diagram of respective structures of a refrigerator, the external device, and a meat information server, according to an embodiment of the disclosure;

FIG. 3 is a flowchart of a refrigerator control method according to an embodiment of the disclosure;

FIG. 4 is a flowchart of a method by which a refrigerator obtains slaughter date information and part information, according to an embodiment of the disclosure;

FIG. 5 is a flowchart of a method by which a refrigerator obtains slaughter date information and part information, according to an embodiment of the disclosure;

FIG. 6 is a flowchart of a method by which a refrigerator obtains slaughter date information and part information, according to an embodiment of the disclosure;

FIG. 7 is a view illustrating a process of obtaining identification information and part information of meat product, according to an embodiment of the disclosure;

FIG. 8 is a view illustrating an aging setting graphical user interface (GUI) for setting an aging process of meat product, according to an embodiment of the disclosure.

FIG. 9 is a table showing an aging level criterion according to an embodiment of the disclosure;

FIG. 10 is a block diagram illustrating a process of training an artificial intelligence (AI) model, according to an embodiment of the disclosure;

FIG. 11 is a block diagram illustrating a process, performed by a processor of a refrigerator, of predicting an aging level, according to an embodiment of the disclosure;

FIG. 12 is a block diagram illustrating a process of obtaining aging information by using an aging level prediction formula, according to an embodiment of the disclosure;

FIG. 13 is a table showing aging level information according to an embodiment of the disclosure;

FIG. 14 is a table showing aging level information according to an embodiment of the disclosure;

FIG. 15 is a block diagram illustrating a current aging information GUI showing aging information, according to an embodiment of the disclosure;

FIG. 16 is a view illustrating an operation of sharing aging information and recipe information, according to an embodiment of the disclosure;

FIG. 17A is a perspective view of an aging chamber and an aging chamber control module, according to an embodiment of the disclosure;

FIG. 17B is a cross-sectional view of an aging chamber and an aging chamber control module, according to an embodiment of the disclosure;

FIG. 18 is a block diagram of a structure of an aging chamber control module according to an embodiment of the disclosure;

FIG. 19 is a view illustrating a vacuum box and a vacuum pump, according to an embodiment of the disclosure;

FIG. 20 is a flowchart of a process of selecting an aging method and conducting aging, according to an embodiment of the disclosure;

FIG. 21 is a view illustrating a process of setting a target aging date, according to an embodiment of the disclosure;

FIG. 22 is a flowchart of an aging termination and notification providing process, according to an embodiment of the disclosure;

FIG. 23 is a block diagram of a refrigerator according to an embodiment of the disclosure; and

FIG. 24 is a block diagram of a mobile device in a network environment, according to an embodiment of the disclosure.

The same reference numerals are used to represent the same elements throughout the drawings.

## MODE OF DISCLOSURE

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The principle of embodiments of the disclosure is explained and disclosed so that the scope of the claims is clarified and one of ordinary skill in the art to which embodiments of the disclosure pertain implements the embodiments recited in the claims. The disclosed embodiments may have various forms.

Throughout the specification, like reference numerals or characters refer to like elements. In the specification, all elements of embodiments are not explained, but general matters in the technical field of the disclosure or redundant matters between embodiments will not be described. The term "module" or "unit" used herein may be implemented as one or more of software, hardware, or firmware. According to embodiments of the disclosure, a plurality of "modules" or "units" may be implemented as one element, or one "module" or "unit" may include a plurality of elements.

In the description of embodiments of the disclosure, certain detailed explanations of the related art are omitted when it is deemed that they may unnecessarily obscure the essence of the disclosure. While such terms as "first," "second," etc., may be used to describe various components, such components must not be limited to the above terms. The above terms are used only to distinguish one component from another.

When an element (e.g., a first element) is "coupled to" or "connected to" another element (e.g., a second element), the first element may be directly coupled to or connected to the second element, or, unless otherwise described, a third element may exist therebetween.

Embodiments of the disclosure provide a refrigerator capable of obtaining information about meat product for predicting the aging of the meat product and accurately predicting the maturity of the meat product, a method of controlling the refrigerator, and a recording medium storing a computer program for performing the method.

The operational principles of embodiments of the disclosure and various embodiments of the disclosure will now be described more fully with reference to the accompanying drawings.

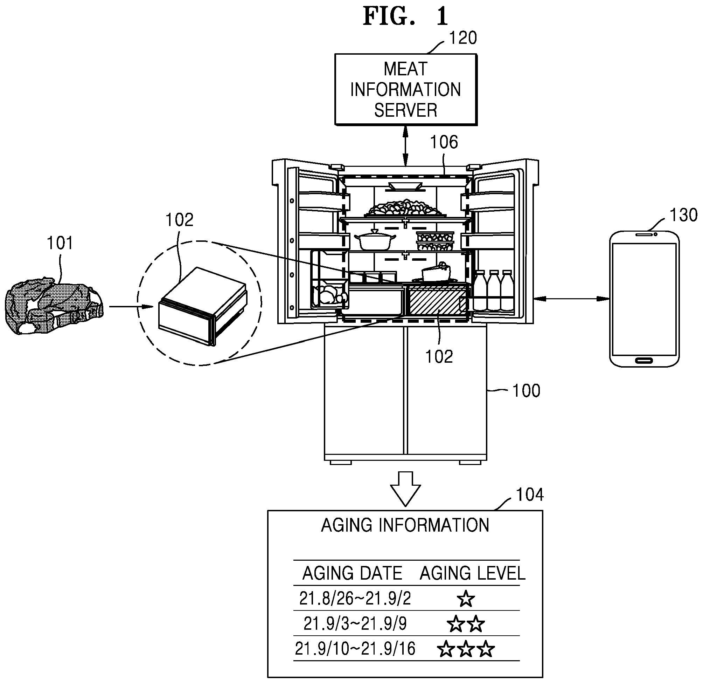

FIG. 1 illustrates a structure of a refrigerator, an external device, and a meat information server, according to an embodiment of the disclosure.

Referring to FIG. 1, a refrigerator 100 according to an embodiment of the disclosure includes an aging chamber 102 included in a refrigerating chamber 106. The refrigerator 100 has a meat aging function of aging a meat product 101 while the meat product 101 is being inserted into the aging chamber 102.

In the meat aging function, the meat product 101 inserted into the aging chamber 102 is aged. When the meat product 101 is put into the aging chamber 102, the refrigerator 100 controls the temperature and humidity inside the aging chamber 102 to age the meat product 101. The meat product 101 is aged in a refrigerated state. Meat aging methods include wet aging and dry aging. As the meat product 101 ages, the taste of meat is enhanced. However, the quality of aging may vary depending on aging environments, and microorganisms may grow in the meat product 101 and thus the meat product 101 may be decayed. Therefore, for the aging of the meat product 101, the temperature and humidity in the aging chamber 102 needs to be maintained under predetermined conditions.

The refrigerator 100 may obtain information about the meat product 101 to predict the maturity level of the meat product 101. The refrigerator 100 may obtain the slaughter date and part information of the meat product 101. The slaughter date is the date on which the meat product 101 is slaughtered. The part information indicates which part of the meat the meat product 101 corresponds to. The part information may be defined as, for example, sirloin, tenderloin, and neck.

According to an embodiment of the disclosure, the meat 101 corresponds to Korean beef. The meat product 101 may correspond to meat product 101 prepared for each part. The meat product 101 may be packaged in a predetermined packaging material, and may have a product label on the packaging material. The product label may have information such as an individual history number, part information, and an expiration date.

According to an embodiment of the disclosure, the refrigerator 100 may obtain slaughter date information, based on the individual history number of the meat product 101. The refrigerator 100 may obtain the slaughter date information from a meat information server 120 or obtain the slaughter date information from an external device 130. The external device 130 may obtain the individual history number written on the product label, and may obtain the slaughter date information from the meat information server 120.

The external device 130 may correspond to various types of electronic devices having a communication function. For example, the external device 130 may have the form of a mobile device. The external device 130 may correspond to a smartphone, a wearable device, a tablet personal computer (PC), an oven, a smart cooking appliance, a refrigerator, a smart home hub, or the like.

According to an embodiment of the disclosure, the refrigerator 100 may obtain part information of the meat product 101. The refrigerator 100 may obtain the part information, based on a user input. According to an embodiment of the disclosure, the refrigerator 100 may receive, from the external device 130, part information defined based on the user input.

The refrigerator 100 may generate aging information 104, based on the slaughter date information and the part information. The aging information 104 indicates the degree of aging according to an aging period. The aging period indicates the period of aging from the date of slaughter. The aging period may be defined in the form of several days, or may be defined as a date range. The degree of aging indicates the degree to which aging is conducted. The degree of aging may be expressed as stages (stage 1, stage 2, stage 3, etc.) or may be expressed as the number of stars. The aging information 104 may indicate the degree of aging predicted for each aging period at the time of insertion of the meat product 101. For example, the aging information 104 may indicate the degree of aging at a current time after aging is performed by the refrigerator 100.

The refrigerator 100 may output the aging information 104 through a user interface. The aging information 104 may be output through a display, a speaker, or the like of the refrigerator 100. According to an embodiment of the disclosure, the refrigerator 100 may output the aging information 104 to the external device 130 and may output the aging information 104 through the external device 130.

The refrigerator 100 may access a network through an access point (AP) device (not shown) in a house, and may communicate with the meat information server 120 or the external device 110. The refrigerator 100 may directly communicate with the external device 130 in a Device to Device (D2D) method. For example, the refrigerator 100 may communicate with the external device 130 through an Internet of things (IoT) server (not shown) in a Device to Server (D2S) method.

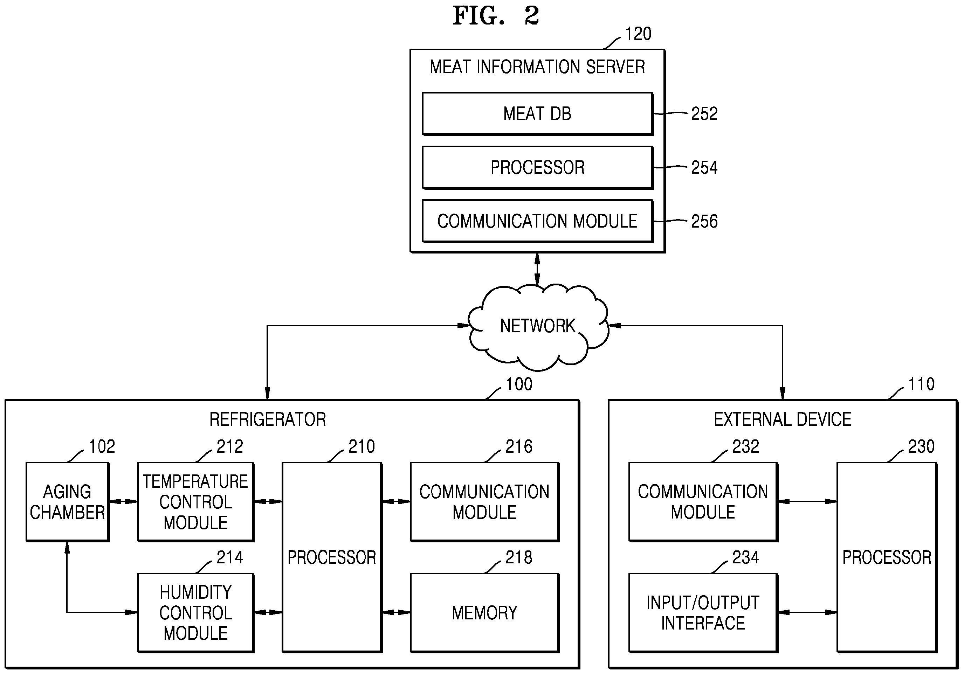

FIG. 2 is a block diagram of respective structures of a refrigerator, an external device, and a meat information server, according to an embodiment of the disclosure.

Referring to FIG. 2, the refrigerator 100 includes the aging chamber 102, a processor 210, a temperature control module 212, a humidity control module 214, a communication module 216, and a memory 218.

The aging chamber 102 has a space for storing the meat product 101 therein. When the aging chamber 102 is closed, an air flow with the refrigerating chamber 106 is blocked or controlled.

The aging chamber 102 is disposed in a container of the refrigerating chamber 106. A container is a space for storing food. The container is maintained at a low temperature of a certain temperature by the refrigerating module of the refrigerator 100. The refrigerator 100 uses the humidity control module 214 to control an air flow inside the aging chamber 102. The humidity of the aging chamber 102 may be controlled by the air flow inside the aging chamber 102. The refrigerator 100 uses the temperature control module 212 to control a temperature inside the aging chamber 102.

The aging chamber 102 may have the form of a drawer or a box provided with a lid.

When the aging chamber 102 has a drawer shape, a state in which the drawer is pulled out is defined as an open state, and a state in which the drawer is inserted is defined as a closed state. The aging chamber 102 may be arranged in the form of a drawer in the refrigerating chamber 106.

When the aging chamber 102 has the shape of a box with a lid, a state in which the box is not covered by the lid is defined as an open state, and a state in which the box is covered by the lid is defined as a closed state. When the aging chamber 102 is closed, an air flow with the refrigerating chamber 106 is blocked. The box may be arranged at a predetermined location within the refrigerating chamber 106. The box may be disposed adjacent to the temperature control module 212 and the humidity control module 214 in the refrigerating chamber 106.

The aging chamber 102 may include a wire tray. The wire tray is a tray on which the meat product 101 is placed, and has a structure in which moisture generated from the meat product 101 can fall down the tray.

The processor 210 may control all operations of the refrigerator 100. The processor 210 may be implemented as one or more processors. The processor 210 may perform a certain operation by executing an instruction or command stored in the memory 218. The processor 210 may control operations of components included in the refrigerator 100. The processor 210 may include at least one of a central processing unit (CPU), a graphics processing unit (GPU), or a neural processing unit (NPU), or a combination thereof.

The temperature control module 212 may supply cold air into the aging chamber 102 and may control the temperature inside the aging chamber 102 by controlling the amount of cold air supplied to the aging chamber 102. The temperature control module 212 may supply the cold air from a cold air flow path duct of the refrigerating module into the aging chamber 102. The temperature control module 212 may supply the cold air to the aging chamber 102 by using a certain cold air inlet structure and a fan. The temperature control module 212 may control the amount of cold air supplied to the aging chamber 102 by the speed of the fan.

According to an embodiment of the disclosure, the temperature control module 212 includes a temperature sensor that measures the temperature inside the aging chamber 102. The temperature control module 212 may measure the temperature inside the aging chamber 102, and may transmit a measured temperature value to the processor 210.

The processor 210 may control the speed of the fan of the temperature control module 212 to adjust the amount of cold air supplied to the aging chamber 102 and adjust the internal temperature of the aging chamber 102. The processor 210 receives an internal temperature value of the aging chamber 102 from the temperature sensor of the temperature control module 212. The processor 210 may adjust the internal temperature of the aging chamber 102 to a set temperature. The set temperature may be set to 2°C. The processor 210 may control the internal temperature of the aging chamber 102 not to exceed a maximum of 4°C. The processor 210 may increase the speed of the fan to lower the internal temperature of the aging chamber 102, and may decrease the speed of the fan to increase the internal temperature.

The humidity control module 214 circulates the air inside the aging chamber 102. The humidity control module 214 may include a blowing fan. The blowing fan circulates the air inside the aging chamber 102 to adjust the humidity inside the aging chamber 102. When the speed of the blowing fan increases, the humidity decreases. When the speed of the blowing fan decreases, the humidity increases. As the humidity decreases, the surface of the meat product 101 is dried.

The humidity control module 214 may include a humidity sensor. The humidity sensor measures the humidity inside the aging chamber 102. The humidity sensor outputs a measured humidity value to the processor 210.

The processor 210 controls the humidity of the aging chamber 102 by controlling the humidity control module 214. The processor 210 may adjust the humidity of the aging chamber 102 to a set humidity. When the humidity of the aging chamber 102 is higher than the set humidity, the processor 210 increases the speed of the blowing fan to lower the humidity. When the humidity of the aging chamber 102 is lower than the set humidity, the processor 210 decreases the speed of the blowing fan to lower the humidity.

According to an embodiment of the disclosure, the set humidity may vary according to an aging method. The aging method of the meat product 101 includes a wet aging method and a dry aging method.

In the wet aging method, the meat product 101 is packaged by vacuum packaging, and aging is performed. The wet aging method prevents meat shrinkage and weight loss by suppressing moisture evaporation. The wet aging method minimizes spoilage and damage to meat by blocking air. When the wet aging method is selected, the processor 210 deactivates the humidity control module 214 and does not perform humidity control.

In the dry aging method, the meat product 101 is not packaged, and the meat product 101 is aged while controlling the wind, temperature, and humidity. In the case of the dry aging method, the surface becomes dry as the aging progresses. Accordingly, when the aging is completed, the dried surface is removed from the meat product 101, and thus a weight loss occurs. In the dry aging method, rich and savory flavor may be added to meat. Due to oxidation of fat by dry aging, the meat product 101 may have a nutty flavor. Due to microbial growth by dry aging, the meat product 101 may have a blue cheese flavor.

When the dry aging method is selected, the processor 210 sets the set humidity of the aging chamber 102 to 80 to 85% RH (Relative Humidity). The processor 210 controls the humidity control module 214 so that the aging chamber 102 is within a set humidity range. The processor 210 controls the humidity of the aging chamber 102 by controlling the speed of the blowing fan of the humidity control module 214. The processor 210 may control the speed of the blowing fan within the range of 0.2 to 2 m/s.

The communication module 216 may communicate with the external device 110 and the meat information server 120 by wire or wirelessly. The communication module 216 may access an access point (AP) device to transmit/receive a wireless fidelity (Wi-Fi) signal. The processor 210 may control transmit/receive operations of the communication module 216.

The communication module 216 may include a wireless communication module (e.g., a cellular communication module, a short-range wireless communication module, or a global navigation satellite system (GNSS) communication module), or a wired communication module (e.g., a local area network (LAN) communication module or a power line communication module). The communication module 216 may perform short-range communication, and may use, for example, Bluetooth, Bluetooth Low Energy (BLE), Near Field Communication, wireless local area network (WLAN) (Wi-Fi), Zigbee, Infrared Data Association (IrDA) communication, Wi-Fi Direct (WFD), ultrawideband (UWB), or Ant+ communication. For example, the communication module 216 may perform long-distance communication, for example, may communicate with an external device through a legacy cellular network, a fifth-generation (5G) network, a next-generation communication network, the Internet, or a computer network (e.g., LAN or wide area network (WAN)).

For example, the communication module 216 may use mobile communication, and may exchange a wireless signal with at least one of a base station, an external terminal, or a server on a mobile communication network.

The communication module 216 may communicate with the external device 110 and the meat information server 120. According to an embodiment of the disclosure, the communication module 216 may be connected to an AP device in the house through Wi-Fi communication. The communication module 216 may communicate with the meat information server 120 through the AP device.

The memory 218 may store various pieces of information, data, instructions, programs, etc. necessary for operations of the refrigerator 100. The memory 218 may include one or both of volatile memory and nonvolatile memory, or a combination thereof. The memory 218 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The memory 218 may correspond to a web storage or a cloud server which performs a storage function on the Internet.

The external device 110 may include a processor 230, a communication module 232, and an input/output interface 234.

The processor 230 may control all operations of the external device 110. The processor 230 may be implemented as one or more processors. The processor 230 may perform a certain operation by executing an instruction or command stored in a memory. The processor 230 may control operations of components included in the external device 110. The processor 230 may include at least one of a CPU, a GPU, or an NPU, or a combination thereof.

The communication module 232 may communicate with the refrigerator 100 and the meat information server 120 by wire or wirelessly. The communication module 232 may access an AP device to transmit/receive a Wi-Fi signal. The processor 230 may control transmit/receive operations of the communication module 232.

The communication module 232 may include a wireless communication module (e.g., a cellular communication module, a short-range wireless communication module, or a global navigation satellite system (GNSS) communication module), or a wired communication module (e.g., a local area network (LAN) communication module or a power line communication module). The communication module 232 may perform short-range communication, and may use, for example, Bluetooth, Bluetooth Low Energy (BLE), Near Field Communication, WLAN (Wi-Fi), Zigbee, Infrared Data Association (IrDA) communication, Wi-Fi Direct (WFD), ultrawideband (UWB), or Ant+ communication. For example, the communication module 232 may perform long-distance communication, for example, may communicate with an external device through a legacy cellular network, a 5G network, a next-generation communication network, the Internet, or a computer network (e.g., LAN or WAN).

For example, the communication module 232 may use mobile communication, and may exchange a wireless signal with at least one of a base station, an external terminal, or a server on a mobile communication network.

The input/output interface 234 receives a user input and outputs certain information or data. The input/output interface 234 may include, for example, a touch screen, a touch pad, a key, a button, a speaker, and the like.

The input/output interface 234 may include a camera. The processor 230 may obtain identification information of the meat product 101 from an image captured by a camera. For example, the processor 230 recognizes the individual history number of the meat product 101 from an image obtained by photographing the product label of the packaging material of the meat product 101 by using the camera. According to an embodiment of the disclosure, the processor 230 recognizes a barcode from the image, and recognizes the object history number from the barcode. According to an embodiment of the disclosure, the processor 230 recognizes a character representing the object history number from the image by using an optical character reader (OCR), and obtains the object history number from recognized information.

The processor 230 may output, through the input/output interface 234, a part information input graphic user interface (GUI) through which a user is able to input the part information of the meat product 101. The input/output interface 234 may obtain the part information from a user input that is input through the part information input GUI.

According to an embodiment of the disclosure, the processor 230 may transmit the obtained object history number and the obtained part information to the refrigerator 100.

According to an embodiment of the disclosure, the processor 230 may obtain the slaughter date information from the meat information server 120 by using the obtained individual history number. The processor 230 may transmit a slaughter date information request including the individual history number to the meat information server 120. The meat information server 120 may search for slaughter date information corresponding to the individual history number, and may transmit found slaughter date information to the external device 110. The external device 110 may transmit the obtained slaughter date information and the obtained part information to the refrigerator 100.

The input/output interface 234 may output the aging date information of the meat product 101 received from the refrigerator 100. For example, the input/output interface 234 may display information about meat product (e.g., a meat type, as slaughter date, and part information) and an aging level for each aging period.

The meat information server 120 may include a meat database (DB) 252, a processor 254, and a communication module 256.

The meat DB 252 may store an individual identification number and a history of slaughtered meat product. For example, the meat DB 252 stores an individual identification number and a history of Korean beef. The history may include the date of slaughter, a slaughterhouse, and the like.

The processor 254 may control operations of the meat information server 120. When the processor 254 receives the slaughter date information request from the refrigerator 100 or the external device 110, the processor 254 searches for the slaughter date information corresponding to the object identification number included in the slaughter date information request from the meat DB 252. As such, the meat information server 120 provides a livestock product history open application program interface (API) service that may be used by various users and devices.

The communication module 256 communicates with the refrigerator 100 and the external device 110 through a network.

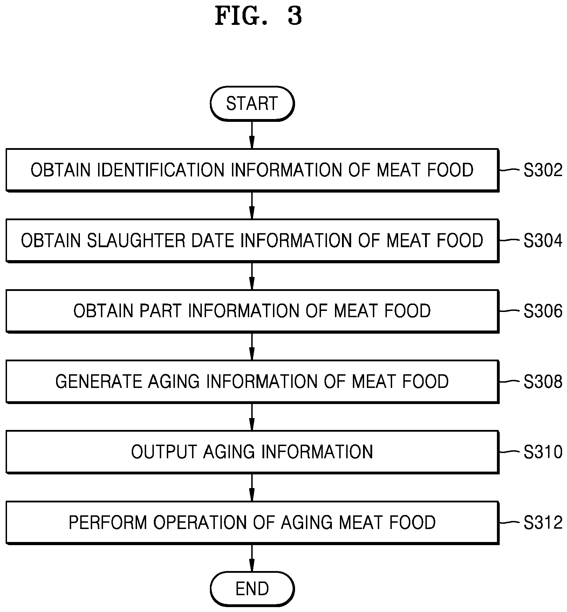

FIG. 3 is a flowchart of a refrigerator control method according to an embodiment of the disclosure.

Each operation of the refrigerator control method according to an embodiment of the disclosure may be performed by various types of refrigerators having an aging chamber. An embodiment in which the refrigerator 100 according to embodiments of the disclosure performs a refrigerator controlling method will now be focused on and described. Thus, the embodiments described above regarding the refrigerator 100 are applicable to embodiments of a refrigerator controlling method, and, inversely, the embodiments described above regarding the refrigerator controlling method are applicable to the embodiments for the refrigerator 100 Refrigerator controlling methods according to disclosed embodiments are performed by the above-described refrigerator 100, but embodiments are not limited thereto. The refrigerator controlling methods according to embodiments may be performed by various types of refrigerators.

Referring to FIG. 3, in operation S302, the refrigerator 100 obtains identification information of the meat product 101. The identification information may correspond to an object history number. According to an embodiment of the disclosure, the refrigerator 100 obtains the individual history number written on the product label of the meat product 101 by using a camera or a user interface provided in the refrigerator 100. According to an embodiment of the disclosure, the refrigerator 100 obtains the object history number obtained by the external device 110.

Next, in operation S304, the refrigerator 100 obtains the slaughter date information of the meat product 101, based on the identification information of the meat product 101. According to an embodiment of the disclosure, the refrigerator 100 transmits, to the meat information server 120, a slaughter date information request including the identification information of the meat product 101. The refrigerator 100 receives the slaughter date information from the meat information server 120. According to an embodiment of the disclosure, the refrigerator 100 receives, from the external device 110, the slaughter date information found based on the identification information of the meat product 101 in the external device 110.

Next, in operation S306, the refrigerator 100 obtains part information of the meat product 101. The meat information server 120 stores the livestock product history, and, because the livestock product history is stored in units of slaughtered animals, part information of each meat product may not be obtained from the meat information server 120. Accordingly, the refrigerator 100 obtains the part information, based on a user input, a product label, and the like. According to an embodiment of the disclosure, the refrigerator 100 receives a user input for inputting part information by using an input/output interface of the refrigerator 100, and obtains the part information based on the user input. According to an embodiment of the disclosure, the refrigerator 100 photographs a product label using a camera of the refrigerator 100, and recognizes and obtains the part information written on the product label. According to an embodiment of the disclosure, the refrigerator 100 receives, through the communication module 216, the part information obtained based on the user input for inputting the part information from the external device 110. According to an embodiment of the disclosure, the refrigerator 100 receives, through the communication module 216, part information recognized from an image obtained by photographing the product label of the meat product 101 by using the camera of the external device 110.

Next, in operation S308, the refrigerator 100 generates aging information of the meat product 101, based on the slaughter date information and the part information.

According to an embodiment of the disclosure, the refrigerator 100 generates aging information according to a period by inputting the slaughter date information and the part information into a predefined aging prediction equation. The refrigerator 100 may determine a constant of the prediction equation, based on the part information, and may input an aging date calculated from the slaughter date to the prediction equation, thereby calculating the aging level for each aging period.

According to an embodiment of the disclosure, the refrigerator 100 may obtain aging information by using an artificial intelligence (AI) model learned based on training data. According to an embodiment of the disclosure, the AI model is trained using training data including an aging date, part information, and an aging level. The refrigerator 100 may obtain aging levels for aging periods by inputting an aging date and part information to the AI model.

According to an embodiment of the disclosure, the AI model is used using training data including an aging date, part information, an aging temperature, a blowing fan speed, and an aging level. A refrigerator may obtain aging levels for aging periods by inputting an aging date, part information, an aging temperature, and a blowing fan speed to the AI model.

The refrigerator 100 generates aging information including aging levels for aging periods.

Next, in operation S310, the refrigerator 100 outputs the aging information. According to an embodiment of the disclosure, the refrigerator 100 outputs the aging information by using a display, a speaker, etc. included in the refrigerator 100. According to an embodiment of the disclosure, the refrigerator 100 transmits the aging information to the external device 130, and the external device 130 outputs the received aging information. According to an embodiment of the disclosure, the refrigerator 100 transmits aging level information to an IoT server, and outputs the aging level information through at least one IoT device registered in a user account of the IoT server.

Next, in operation S312, the refrigerator 100 performs an operation of aging the meat product 101. The refrigerator 100 ages the meat product 101 by controlling the temperature and humidity of an aging chamber. The refrigerator 100 ages the meat product 101 in a wet aging method or a dry aging method, based on a user's selection.

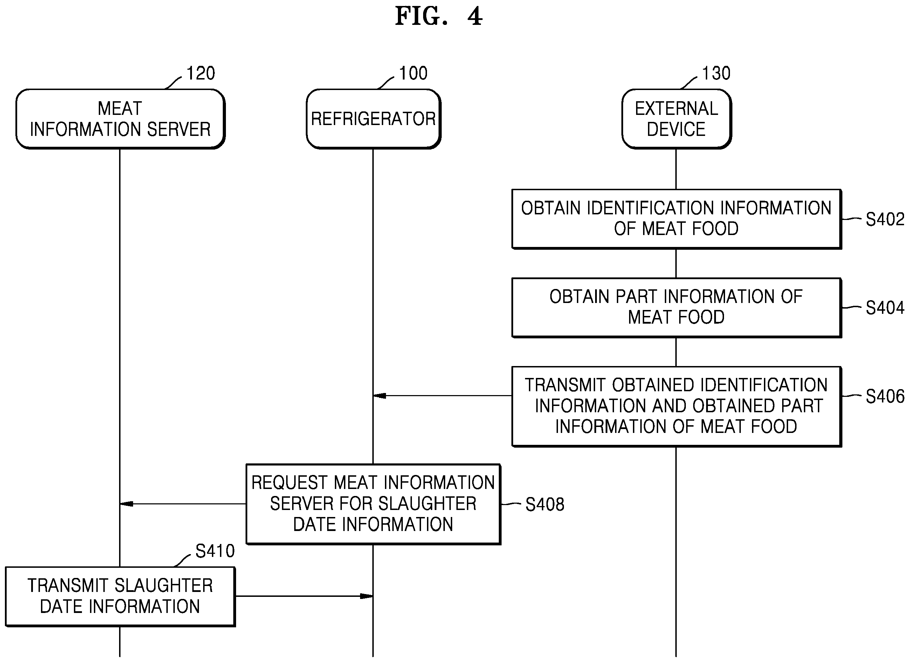

FIG. 4 is a flowchart of a method by which a refrigerator obtains slaughter date information and part information, according to an embodiment of the disclosure.

According to an embodiment of the disclosure, the refrigerator 100 obtains the slaughter date information, based on the identification information of the meat product 101.

Referring to FIG. 4, in operation S402, the external device 130 obtains the identification information of the meat product 101. As described above, the external device 130 may photograph the product label of the meat product 101 by using a camera, and may obtain the identification information of the meat product 101 from an image obtained by photographing the product label.

Next, in operation S404, the external device 130 obtains the part information of the meat product 101. According to an embodiment of the disclosure, the external device 130 receives a user input for inputting the part information of the meat product 101 through a certain application. According to an embodiment of the disclosure, the external device 130 recognizes the part information of the meat product 101 from the image obtained by photographing the product label. The external device 130 recognizes the part information by using a method such as character recognition.

Next, in operation S406, the external device 130 transmits the obtained identification information and the obtained part information of the meat product 101 to the refrigerator 100. According to an embodiment of the disclosure, the external device 130 may transmit the identification information and the part information to the refrigerator 100 through short-distance communication with the refrigerator 100. According to an embodiment of the disclosure, the external device 130 may transmit the identification information and the part information to the refrigerator 100 through an IoT server.

Next, in operation S408, the refrigerator 100 transmits, to the meat information server 120, a slaughter date information request including the identification information of the meat product 101.

In operation S410, the meat information server 120 searches for the slaughter date information, based on the slaughter date information request, and transmits the slaughter date information to the refrigerator 100.

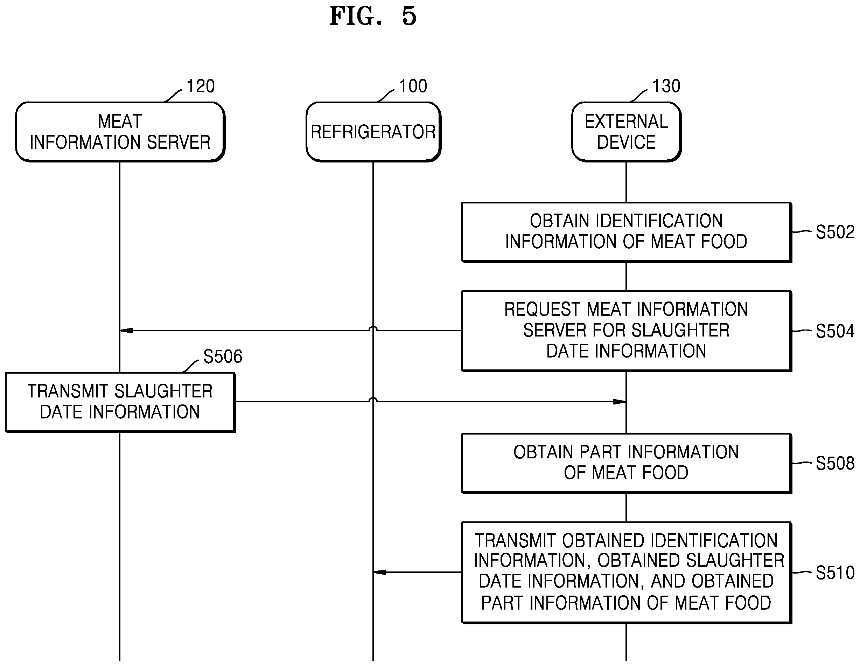

FIG. 5 is a flowchart of a method by which a refrigerator obtains slaughter date information and part information, according to an embodiment of the disclosure.

According to an embodiment of the disclosure, the external device 130 obtains the identification information, the slaughter date information, and the part information of the meat product 101, and transmits the obtained identification information, the obtained slaughter date information, and the obtained part information to the refrigerator 100.

Referring to FIG. 5, in operation S502, the external device 130 obtains the identification information of the meat product 101. As described above, the external device 130 may photograph the product label of the meat product 101 by using a camera, and may obtain the identification information of the meat product 101 from an image obtained by photographing the product label.

Next, in operation S504, the external device 130 transmits, to the meat information server 120, a slaughter date information request including the identification information of the meat product 101.

In operation S506, the meat information server 120 searches for the slaughter date information, based on the slaughter date information request, and transmits the slaughter date information to the external device 130.

Next, in operation S508, the external device 130 obtains the part information of the meat product 101. According to an embodiment of the disclosure, the external device 130 receives a user input for inputting the part information of the meat product 101 through a certain application. According to an embodiment of the disclosure, the external device 130 recognizes the part information of the meat product 101 from the image obtained by photographing the product label. The external device 130 recognizes the part information by using a method such as character recognition.

Next, in operation S510, the external device 130 transmits the obtained identification information, the obtained slaughter date information, and the obtained part information of the meat product 101 to the refrigerator 100.

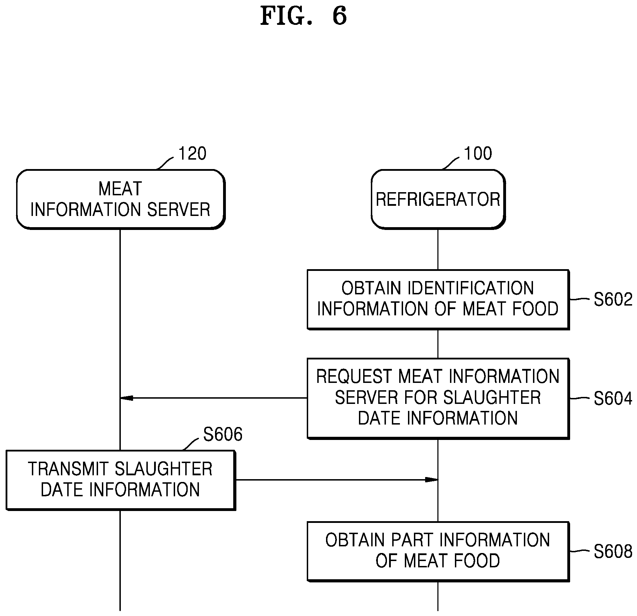

FIG. 6 is a flowchart of a method by which a refrigerator obtains slaughter date information and part information, according to an embodiment of the disclosure.

According to an embodiment of the disclosure, the refrigerator 100 directly obtains the slaughter date information and the part information.

Referring to FIG. 6, in operation S602, the refrigerator 100 obtains the identification information of the meat product 101. The refrigerator 100 may photograph the product label of the meat product 101 by using a camera, and may obtain the identification information of the meat product 101 from an image obtained by photographing the product label.

Next, in operation S604, the refrigerator 100 transmits, to the meat information server 120, a slaughter date information request including the identification information of the meat product 101.

In operation S606, the meat information server 120 searches for the slaughter date information, based on the slaughter date information request, and transmits the slaughter date information to the refrigerator 100.

Next, in operation S608, the refrigerator 100 obtains the part information of the meat product 101. According to an embodiment of the disclosure, the refrigerator 100 receives a user input for inputting the part information of the meat product 101 through a certain GUI. According to an embodiment of the disclosure, the refrigerator 100 recognizes the part information of the meat product 101 from the image obtained by photographing the product label. The refrigerator 100 recognizes the part information by using a method such as character recognition.

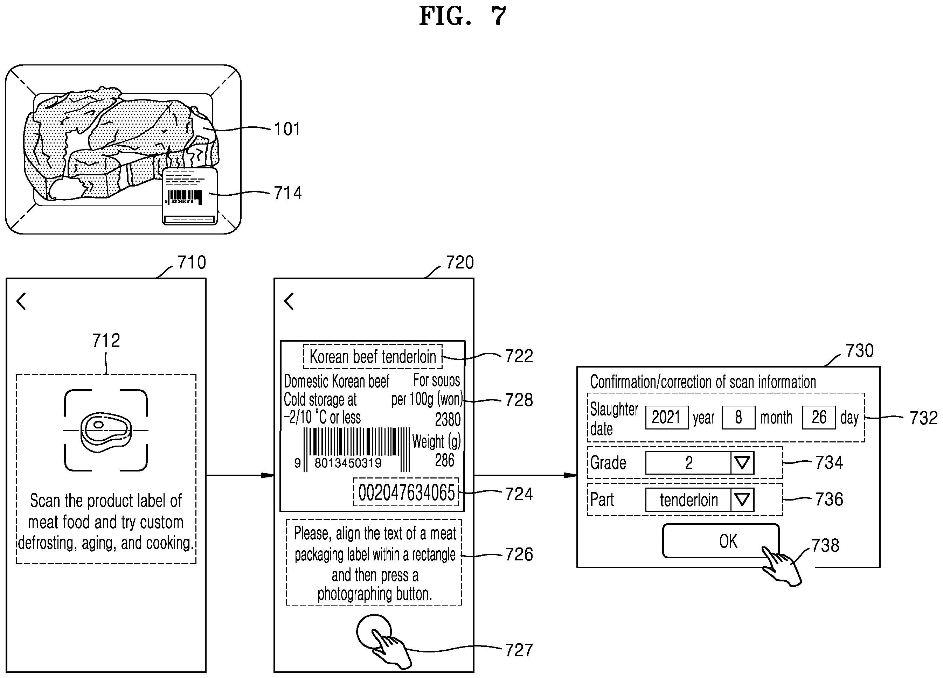

FIG. 7 is a view illustrating a process of obtaining identification information and part information of meat product, according to an embodiment of the disclosure.

According to an embodiment of the disclosure, the refrigerator 100 or the external device 130 provides an information input GUI for receiving the identification information and the part information of the meat product 101.

Referring to FIG. 7, when the information input GUI is provided by the refrigerator 100, the information input GUI is provided by the camera (not shown), the input/output interface (not shown), and the processor 210 of the refrigerator 100. The input/output interface of the refrigerator 100 may be provided as a combination of a display and a key or may be provided as a touch screen.

When the information input GUI shown in FIG. 7 is provided by the external device 130, the information input GUI is provided by the camera (not shown), the input/output interface 234, and the processor 230 of the external device 130. The input/output interface 234 of the external device 130 may be provided as a combination of a display and a key or may be provided as a touch screen. The external device 130 transmits identification information and part information input through the information input GUI.

The information input GUI provides a photographing guide 712 for photographing a product label 714 of the meat product 101 by using the camera in a first GUI view 710.

Next, the information input GUI provides an operation of photographing the meat product 101 in a second GUI view 720. The information input GUI provides a live view image captured by the camera. In order to adjust the field of view (FOV) of the photographing operation, the second GUI view 720 includes a guide box 728 for guiding an area in which the product label 714 is to be positioned. The second GUI view 720 provides a photographing guide 726 for positioning the product label 714 of the meat product 101 within the guide box 728.

The product label 714 includes information about the meat 101. The product label 714 may include part-related information 722 and an object identification number 724. The refrigerator 100 or the external device 130 that provides the information input GUI recognizes the part-related information 722 and the object identification number 724 from a captured image. The part-related information 722 is information related to a part marked on each meat product. Because the part-related information 722 is not standardized, the refrigerator 100 or the external device 130 may selectively obtain the part-related information 722 from the product label 714. In other words, the refrigerator 100 or the external device 130 may recognize or may not recognize the part-related information 722 from the product label 714.

According to an embodiment of the disclosure, the refrigerator 100 or the external device 130 providing the information input GUI captures an image, based on a user input 727, to generate an input image.

According to an embodiment of the disclosure, when the object identification number 724 is recognized from the live view image, the refrigerator 100 or the external device 130 providing the information input GUI automatically captures the image to generate the input image. For example, when the part-related information 722 and the object identification number 724 are recognized from the live view image, the refrigerator 100 or the external device 130 automatically captures the image to generate the input image.

When the input image is generated, the refrigerator 100 or the external device 130 providing the information input GUI obtains the slaughter date information from the meat information server 120, based on the object identification number 724 recognized from the input image. The refrigerator 100 or the external device 130 providing the information input GUI obtains the part information, based on the part-related information 722 recognized from the input image. The refrigerator 100 or the external device 130 may extract a keyword corresponding to the part information from the part-related information 722, and may generate the part information from the keyword. For example, when the part-related information 722 called 'Korean beef loin' is obtained from the product label 714, part information corresponding to the Korean beef loin is defined.

The part information may be defined as one of a plurality of predefined candidate parts. The plurality of candidate parts may include, for example, sirloin, tenderloin, brisket, ribs, scallops, pork belly, beef ribs, and scallops. When the refrigerator 100 or the external device 130 detects keywords corresponding to the plurality of candidate parts from the part-related information 722, the refrigerator 100 or the external device 130 defines the part information by using the plurality of candidate parts.

The refrigerator 100 or the external device 130 may display slaughter date information 732 and part information 736 recognized from a third GUI view 730. The third GUI view 730 may provide a menu in which the recognized slaughter date information 732 and the recognized part information 736 may be changed by the user. The third GUI view 730 may provide additional information 734 about the meat 101. The additional information 734 may include, for example, a grade, a country of origin, a use (e.g., for soup stock, for curry, or for roasting). The third GUI view 730 may receive a user confirmation input 738 for the recognized slaughter date information 732 and the recognized part information 736. The refrigerator 100 or the external device 130 determines the slaughter date information and the part information, based on the user confirmation input 738.

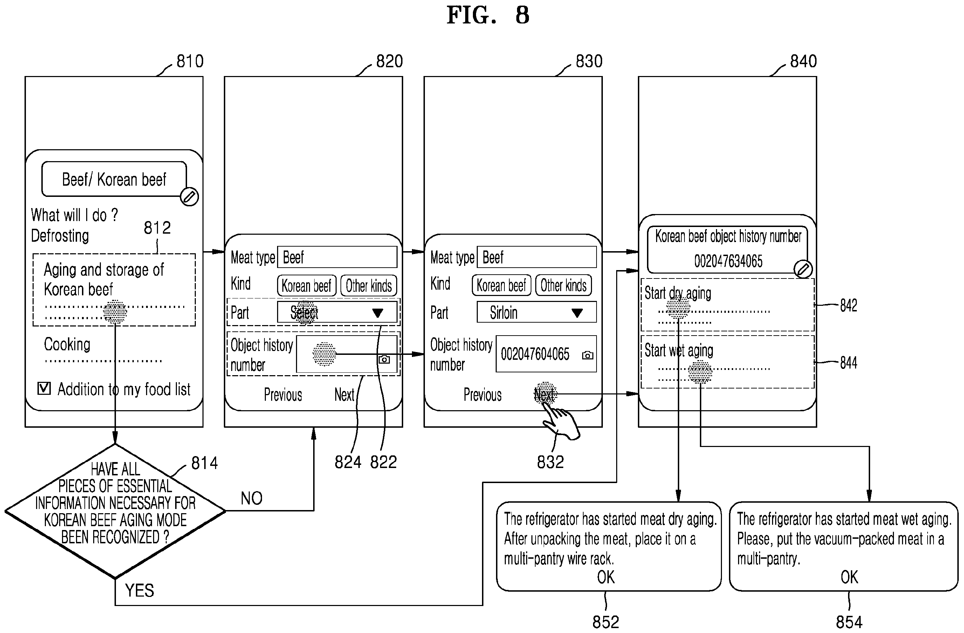

FIG. 8 is a view illustrating an aging setting GUI for setting an aging process of meat product, according to an embodiment of the disclosure.

Referring to FIG. 8, the aging setting GUI is a GUI for setting the aging process of the meat product 101. The aging setting GUI may be provided through the refrigerator 100 or the external device 130. In FIG. 8, it will be described that the aging setting GUI is provided by the external device 130, for convenience of explanation. The refrigerator 100 may provide the aging setting GUI, similarly to a process, performed by the external device 130, of providing the aging setting GUI.

According to an embodiment of the disclosure, the external device 130 may provide an aging setting GUI for setting the aging process of the meat product 101. The aging setting GUI may be provided by the external device 130 through a first application for controlling the refrigerator 100. The first application may correspond to an application that controls a home appliance registered in a user account of an IoT server.

First, in a GUI view 810, the external device 130 may display a plurality of modes that may be provided by the refrigerator 100. The plurality of modes of the refrigerator 100 includes a Korean beef aging mode 812. When a user input for selecting the Korean beef aging mode 812 is received, the external device 130 determines whether all pieces of essential information necessary for the Korean beef aging mode 812 have been recognized, in operation 814.

When all of the pieces of essential information necessary for the Korean beef aging mode 812 are recognized, the aging setting GUI proceeds to a GUI view 840. An operation of the GUI view 840 will be described below.

When all of the pieces of essential information necessary for the Korean beef aging mode 812 are not recognized, the external device 130 receives part information and an individual history number from the GUI view 820. The GUI view 820 provides a part information input menu 822 and an object history number input menu 824. The part information input menu 822 provides candidate parts selectable by the user and receives a user input for selecting one from the candidate parts. The object history number input menu 824 provides a menu for obtaining an object history number by using an input image, and a menu enabling the user to type the object history number.

When the part information and the object history number are input, the external device 130 may display the input part information and the input object history number on a GUI view 830. On the GUI view 830, when a user input 832 of confirming the displayed part information and the displayed object history number is input, the external device 130 may provide a menu for selecting an aging method on a GUI view 840. The GUI view 840 may include a dry aging selection menu 842 and a wet aging selection menu 844. When the user selects the dry aging selection menu 842, the external device 130 may provide guide information 852 for dry aging. When the user selects the wet aging selection menu 844, the external device 130 may provide guide information 854 for wet aging.

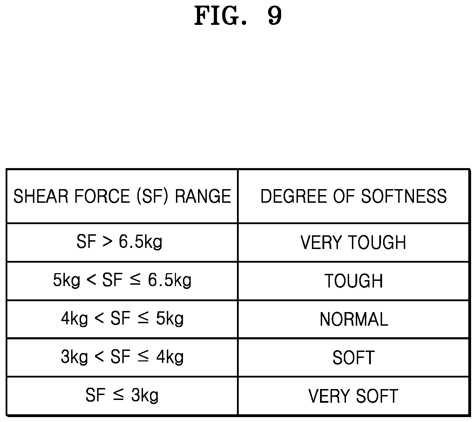

FIG. 9 is a table showing an aging level criterion according to an embodiment of the disclosure.

Referring to FIG. 9, the aging level of meat product may be defined based on a shear force. The shear force refers to a force acting on two adjacent parallel planes in a material with equal magnitude but in opposite directions. The action of this force causes the two surfaces to slide against each other. Meat product is tougher as the shearing force is higher, and is softer as the shearing force is lower. As meat product ages, its shear force decreases, and thus the meat product become softer.

The shear force may be expressed in kg. As shown in FIG. 9, the degree of softness of the meat product varies according to shear force values. For example, when a shear force value exceeds 6.5 kg, the meat product is very tough. When the shear force value exceeds 5 kg and is equal to or less than 6.5 kg, the meat product is tough. When the shear force value exceeds 4 kg and is equal to or less than 5kg, the meat product is normal. When the shear force value exceeds 3 kg and is equal to or less than 4kg, the meat product is soft. When the shear force value is equal to or less than 3kg, the meat product is very soft.

The refrigerator 100 according to an embodiment of the disclosure may predict an aging level defined based on the shear force, and may generate and provide aging level information.

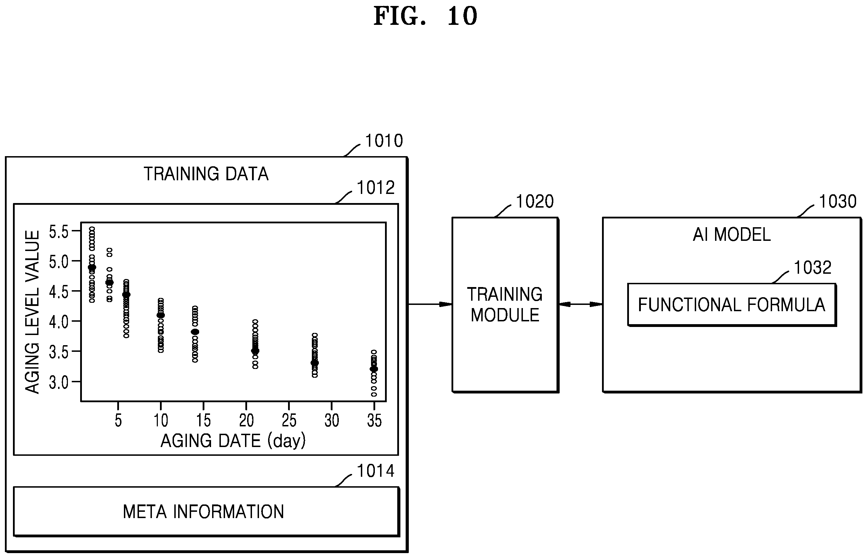

FIG. 10 is a block diagram illustrating a process of training an AI model, according to an embodiment of the disclosure.

Referring to FIG. 10, the processor 210 of the refrigerator 100 predicts the aging level of the meat product 101 for each aging period by using an AI model 1030. The AI model 1030 is a machine learning model trained using training data 1010.

According to an embodiment of the disclosure, the AI model 1030 corresponds to a prediction model generated by supervised learning. The AI model 1030 outputs a result value calculated from a functional formula derived from the training data 1010. Because the prediction model is a supervised learning model, the prediction model is trained with labeled training data. However, because the prediction model expresses a correlation between an input and an output as a functional formula, values other than output values defined in the training data may also be output values. According to an embodiment of the disclosure, the output value of the AI model 1030 corresponds to an aging level value. The aging level value is an output of the functional formula of the AI model 1030.

A training module 1020 may train the AI model 1030 by using the training data 1010. The training data 1010 includes aging level training data 1012 including an aging level value according to the aging day of each meat product. The training data 1010 includes meta information 1014 corresponding to each meat product. The meta information 1014 may include part information of each meat product. According to an embodiment of the disclosure, the meta information 1014 may further include an aging temperature and a blowing fan speed at which each meat product is aged, together with the part information.

The training module 1020 may train the AI model 1030 by using regression analysis, which is one of prediction models. The regression analysis is a learning method for deriving a functional formula corresponding to a straight line or quadratic function curve that describes pieces of data. According to an embodiment of the disclosure, the training module 1020 derives a functional formula representing a relationship between an aging date and part information, which are input values, and an aging level value, which is an output value, according to the regression analysis. According to an embodiment of the disclosure, the training module 1020 derives a functional formula representing a relationship between an aging date, part information, an aging temperature, and a blowing fan speed, which are input values, and an aging level value, which is an output value, according to the regression analysis.

The AI model 1030 is trained by the training module 1020. The AI model 1030 corresponds to a machine-learned AI network model. The AI model 1030 may correspond to a deep neural network model. The AI model 1030 may be trained using the training data 1010, based on one or more nodes and an operation rule between the nodes. The structure of a node, the structure of a layer, and an operation rule between nodes may be variously determined according to embodiments. The AI model 1030 includes hardware resources such as one or more processors, a memory, a register, a summation processor, or a multiplication processor, and operates the hardware resources, based on a parameter set applied to each of the hardware resources. To this end, a processor operating the AI model 1030 may perform a task of allocating hardware resources or resource management processing for each operation of the AI model 1030. The AI model 1030 may have a structure such as a recurrent neural network (RNN), a long short-term memory (LSTM), or the like.

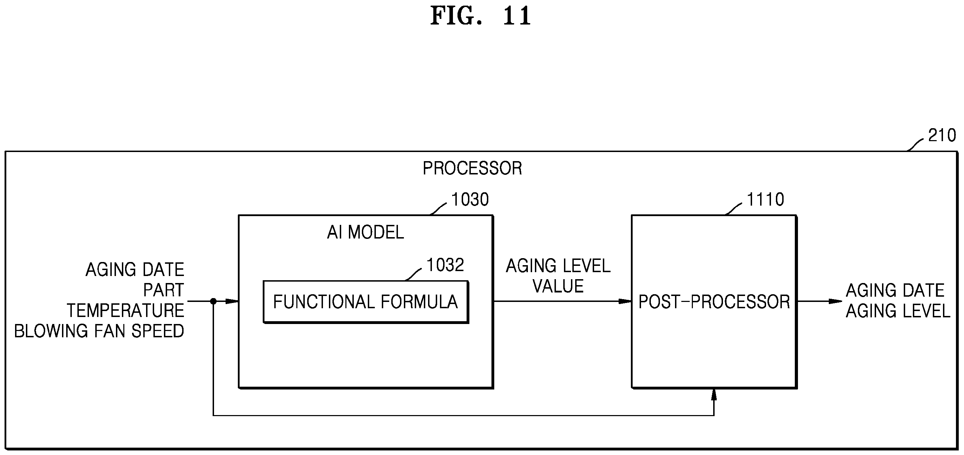

FIG. 11 is a block diagram illustrating a process, performed by a processor of a refrigerator, of predicting an aging level, according to an embodiment of the disclosure.

Referring to FIG. 11, the processor 210 obtains an aging level by using the AI model 1030. The processor 210 may include the AI model 1030 and a post-processor 1110. The AI model 1030 and the post-processor 1110 may correspond to a software module executed by executing an instruction stored in the memory 218.

According to an embodiment of the disclosure, the AI model 1030 may be performed by the IoT server. The refrigerator 100 may transmit an input value of the AI model 1030 to the IoT server, and the IoT server may calculate an aging level value by using the received input value. The IoT server may transmit the aging level value to the refrigerator 100. An embodiment of the disclosure in which the refrigerator 100 performs an operation of the AI model 1030 will now be focused on and described, for convenience of explanation. However, embodiments of the disclosure are also applicable to embodiments in which the AI model 1030 is performed by the IoT server.

The processor 210 may input aging date information and part information to the AI model 1030. The aging date information indicates a date elapsed from a slaughter date. The processor 210 may generate aging date information, based on the slaughter date information. When a future aging level is predicted, the processor 210 inputs predefined aging date information to the AI model 1030. For example, the AI model 1030 inputs aging date information defined as 1 day, 2 days, 3 days, ..., 14 days, etc. to the AI model 1030. When a current aging level is predicted, the processor 210 defines the number of days elapsed from the slaughter date as the aging date information, and inputs the defined number of days to the AI model 1030. For example, when the slaughter date is December 1 and a today's date is December 7, the aging date information is defined as 6.

As described above, the part information may be obtained from an input image or may be obtained from a user input. The processor 210 inputs, to the AI model 1030, part information corresponding to one of pieces of candidate part information defined for the AI model 1030.

According to an embodiment of the disclosure, the AI model 1030 may further receive an aging temperature and a blowing fan speed together with aging date information and part information.

The AI model 1030 may generate an aging level value by using the input value. The AI model 1030 may generates the aging level value by inputting the input value to a functional formula 1032.

Next, the processor 210 may input the aging level value to the post-processor 1110. The post-processor 1110 may generate aging level information in a predefined form from the aging level value. The aging level information is defined as one of predefined candidate aging levels.

The post-processor 1110 may generate the aging level information by matching the aging level value with one of the predefined candidate aging levels according to a predetermined criterion. The post-processor 1110 may convert the aging level value into aging level information by using a certain lookup table. The lookup table may define the aging level as one of the candidate aging levels, based on the range of aging levels. The candidate aging levels are defined as, for example, stage 1, stage 2, and stage 3. For example, the candidate aging levels are defined as toughness, normal, softness, and the like.

The post-processor 1110 may match an aging level value with an aging date and output a result of the matching. For example, the post-processor 1110 outputs aging level information including an aging level defined for each date section.

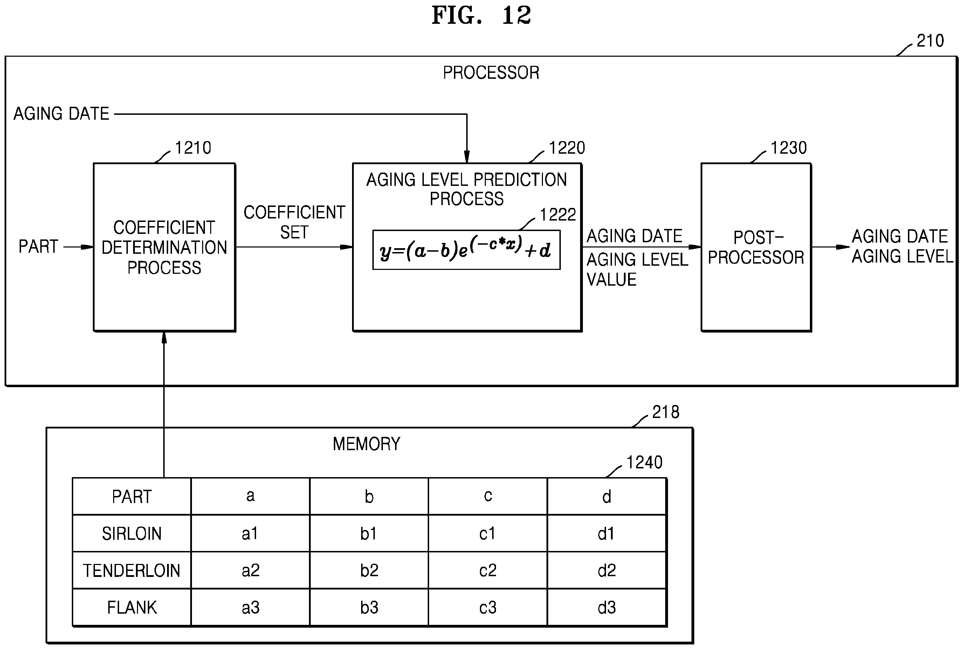

FIG. 12 is a block diagram illustrating a process of obtaining aging information by using an aging level prediction formula, according to an embodiment of the disclosure.

Referring to FIG. 12, the processor 210 of the refrigerator 100 may obtain aging information by using an aging level prediction formula 1222.

The aging level prediction formula 1222 is an equation obtained using big data indicating an aging level according to an aging date. The aging level prediction formula 1222 may be defined, for example, as Equation 1.

## Equation 1

$$y = (a - b)e^{(-c*x)} + d$$

In Equation 1, x is an aging date, y corresponds to an aging level value, and a, b, c, and d are constants determined based on part information, respectively. Here, the constant a is a value corresponding to the y value when x is 0, and represents an initial aging level. The constants b and d correspond to the same values and correspond to the y value when the aging date is infinity. The constant c represents the slope of an exponential function. When C is large, a change in the aging level according to an aging date is large.

The processor 210 may perform a coefficient determination process 1210, based on the part information. The coefficient determination process 1210 is performed based on a lookup table 1240 stored in the memory 218. The lookup table 1240 defines the values of the constants a, b, c, and d according to the part information. In the coefficient determination process 1210, a coefficient set including the values of the constants a, b, c, and d determined based on the part information is input to an aging level prediction process 1220.

In the aging level prediction process 1220, the aging level prediction formula 1222 is set based on the set coefficient set. By substituting the value of the aging date x into the aging level prediction formula 1222, the value of the aging level y is calculated. In the aging level prediction process 1220, an aging date and an aging level are output.

Next, the processor 210 inputs the aging level value to a post-processor 1230. The post-processor 1230 generates aging level information in a predefined form from the aging level value. The aging level information is defined as one of predefined candidate aging levels.

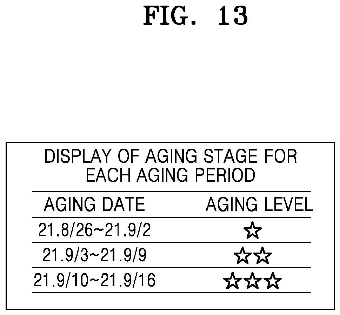

FIG. 13 is a table showing aging level information according to an embodiment of the disclosure.

Referring to FIG. 13, the refrigerator 100 may provide an aging level according to an aging period, as shown in FIG. 13. Aging levels may be expressed in stages. For example, the aging levels may be defined as stage 1 (1 star) with relatively little aging, stage 2 (2 stars) as an intermediate stage, and stage 3 (3 stars) with relatively high aging.

The aging date may be expressed as an aging period having similar aging levels. The aging date may be defined as a first period having the aging level of stage 1, a second period having the aging level of stage 2, and a third period having the aging level of stage 3, from a start date when the refrigerator 100 starts aging of the meat product.

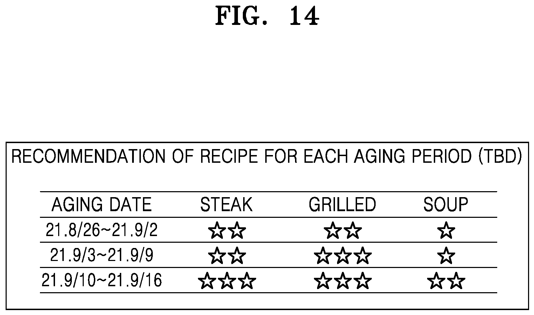

FIG. 14 is a table showing aging level information according to an embodiment of the disclosure.

Referring to FIG. 14, the refrigerator 100 may provide an aging recommendation according to an aging period according to a cooking method, as shown in FIG. 14. The aging recommendation may indicate an aging period suitable for each recipe in stages. For example, the aging recommendation may be defined as stage 1(1 star) of not reaching sufficient aging, stage 2 (2 stars) as an intermediate stage, and stage 3 (3 stars) of reaching sufficient aging. Because different aging levels are required for different recipes, an aging recommendation may be different for each recipe for the same aging period. For example, in soup dishes, it is preferable that meat product is aged at a relatively high aging level and the meat is soft, and, in grilled dishes, it is preferable that meat product is aged at a relatively low aging level and thus the texture is alive. According to an embodiment of the disclosure, by providing aging date information suitable for a recipe, a user may easily predict a suitable aging date according to a recipe.

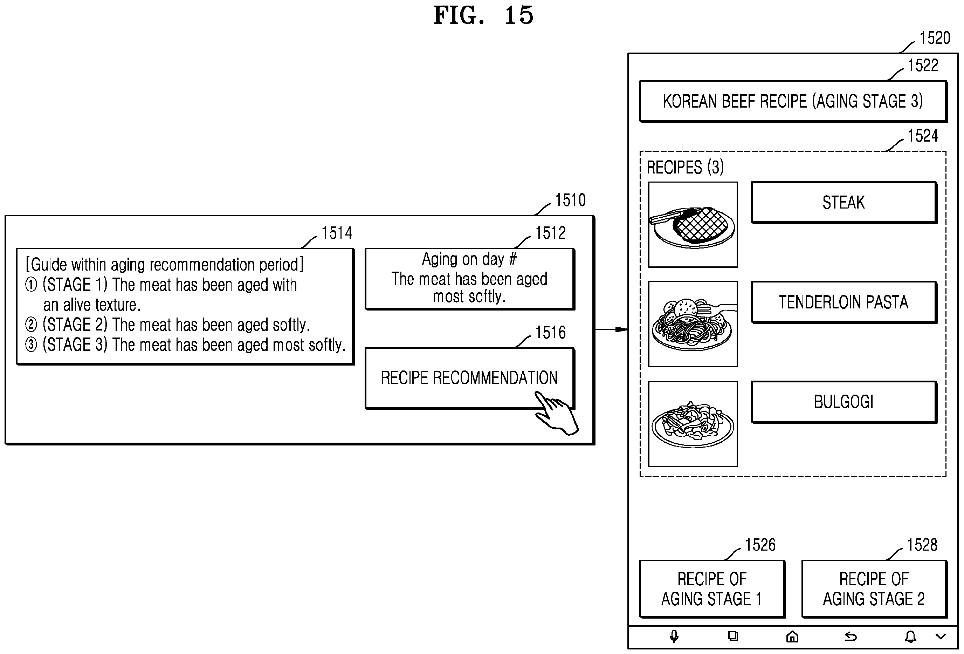

FIG. 15 is a block diagram illustrating a current aging information GUI showing aging information, according to an embodiment of the disclosure.

Referring to FIG. 15, when a user inquires current aging information during aging, the current aging information GUI may provide the current aging information. The user may inquire about current aging information of the meat product 101 currently being aged, through the input/output interface of the refrigerator 100 or the input/output interface 234 of the external device 130. According to an embodiment of the disclosure, when the user terminates the aging currently being conducted, the refrigerator 100 may provide the current aging information.

The current aging information GUI may be provided by the refrigerator 100 or may be provided by the external device 130. The current aging information may be stored in the IoT server, and provided to the external device 130 registered in the user account of the IoT server.

According to an embodiment of the disclosure, the current aging information indicates current aging level information. According to an embodiment of the disclosure, the current aging information indicates aging level information according to a period.

The current aging information GUI displays current aging information 1512 in operation 1510. The current aging information 1512 indicates how many days it is currently aging, and indicates current aging level information (e.g., it is the most softly aged.). According to an embodiment of the disclosure, in operation 1510, the current aging information GUI may provide a guide 1514 within an aging recommendation period.

According to an embodiment of the disclosure, the current aging information GUI provides a recipe recommendation menu 1516 for recommending a recipe, based on current aging information. When the user selects the recipe recommendation menu 1516, the current aging information GUI provides recipe information, in operation 1520.

In operation 1520, the current aging information GUI provides at least one recommended recipe 1524 suitable for a current aging stage. In operation 1520, the current aging information GUI provides current aging stage information 1522. The at least one recommended recipe 1524 may be searched for from the IoT server, and may be provided. The user may search for detailed information of each recipe by selecting the at least one recommended recipe 1524.

According to an embodiment of the disclosure, in operation 1520, the current aging information GUI provides additional recipe providing menus 1526 and 1528 for providing recipes of the other aging stages. When the user selects the additional recipe providing menus 1526 and 1528, the current aging information GUI searches for and provides a recommended recipe corresponding to a selected aging stage.

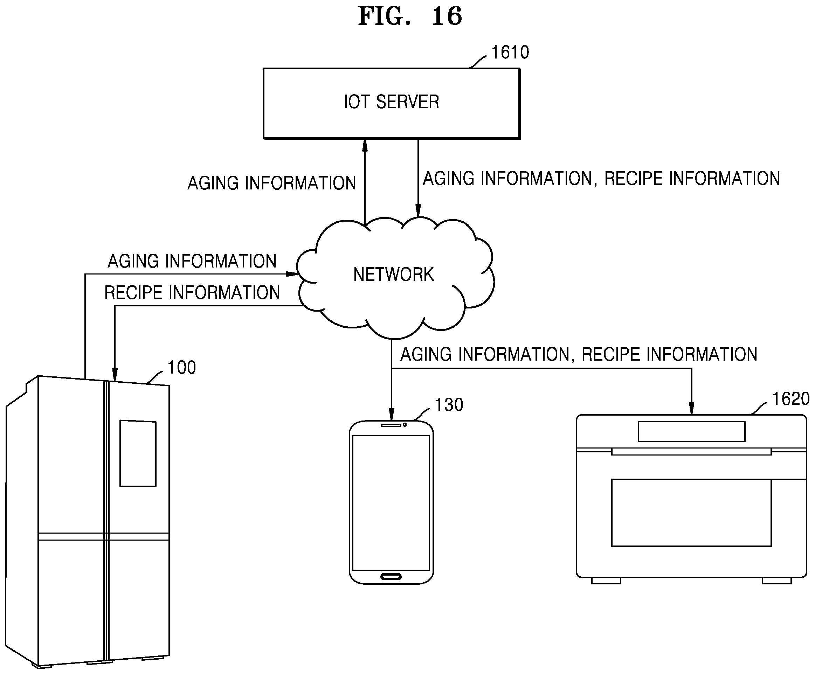

FIG. 16 is a view illustrating an operation of sharing aging information and recipe information, according to an embodiment of the disclosure.

According to an embodiment of the disclosure, aging information and recipe information of the meat product 101 may be shared by the refrigerator 100, the external device 130, an IoT server 1610, and a cooking device 1620. As described above with reference to FIG. 15, the refrigerator 100 or the external device 130 may search for and output the aging information and the recipe information of the meat product 101. The aging information and the recipe information of the meat product 101 may be provided to the IoT server 1610. The refrigerator 100 or the external device 130 generates the aging information of the meat product 101 and transmits the generated aging information to the IoT server 1610 together with the identification information of the meat product 101.

According to an embodiment of the disclosure, the external device 130 or the cooking device 1620 may search for and obtain the aging information and the recipe information of the meat product 101 by using the identification information of the meat product 101.

The external device 130 or the cooking device 1620 may receive the object identification number of the meat product 101 in the form of text, or may receive the object identification number through character recognition from an input image captured by a camera. The external device 130 or the cooking device 1620 transmits the object identification number of the meat product 101 or the input image to the IoT server 1610. The external device 130 or the cooking device 1620 transmits an aging information request or recipe information request including the identification information of the meat product 101 to the IoT server 1610. When the IoT server 1610 receives an aging information request or recipe information request including the input image, the IoT server 1610 recognizes the object identification number from the input image through character recognition to obtain the object identification number.

In response to the aging information request or the recipe information request, the IoT server 1610 searches for the aging information of the meat product 101 by using the object identification number. The aging information of the meat product 101 may correspond to latest aging information of the meat product 101. The IoT server 1610 transmits the identification information and the latest ripening information of the meat product 101 to the external device 130 or the cooking device 1620. In response to the aging information request, the IoT server 1610 transmits the latest aging information to a requesting device (i.e., the external device 130 or the cooking device 1620). In response to the recipe information request, the IoT server 1610 transmits recipe information found based on the latest aging information to the requesting device.

When the meat product 101 is currently aging in the refrigerator 100, the latest aging information corresponds to the current aging information. When aging is in progress in the refrigerator 100, the IoT server 1610 may predict an aging level corresponding to when further aging is performed, and may provide an aging level for each period to the requesting device. In response to the aging information request, the IoT server 1610 may provide the current aging information to the requesting device. In response to the recipe information request, the IoT server 1610 may provide recipe information corresponding to the current aging information to the requesting device.

When the aging of the meat product 101 is terminated, the latest aging information corresponds to aging information corresponding to when the aging is terminated. When the aging was terminated 3 days ago, aging information of 3 days ago corresponds to the latest aging information. In response to the aging information request, the IoT server 1610 transmits the aging information at the time of the termination of aging together with an aging termination date to the requesting device. In response to the recipe information request, the IoT server 1610 may provide recipe information corresponding to the aging information at the time of the termination of aging to the requesting device.

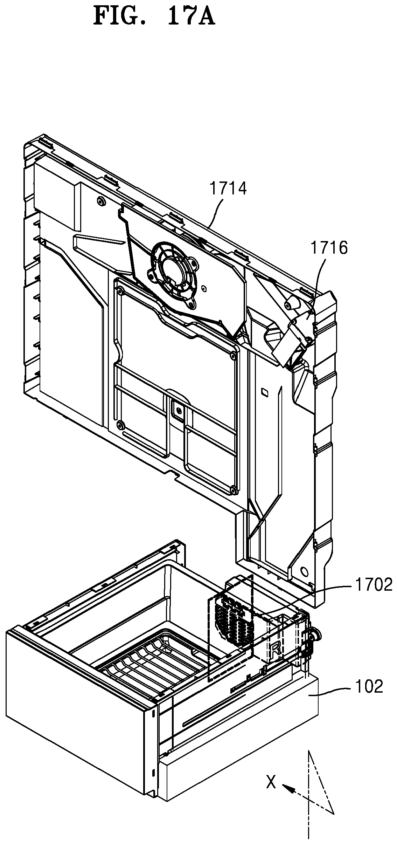

FIG. 17A is a perspective view of an aging chamber and an aging chamber control module, according to an embodiment of the disclosure.

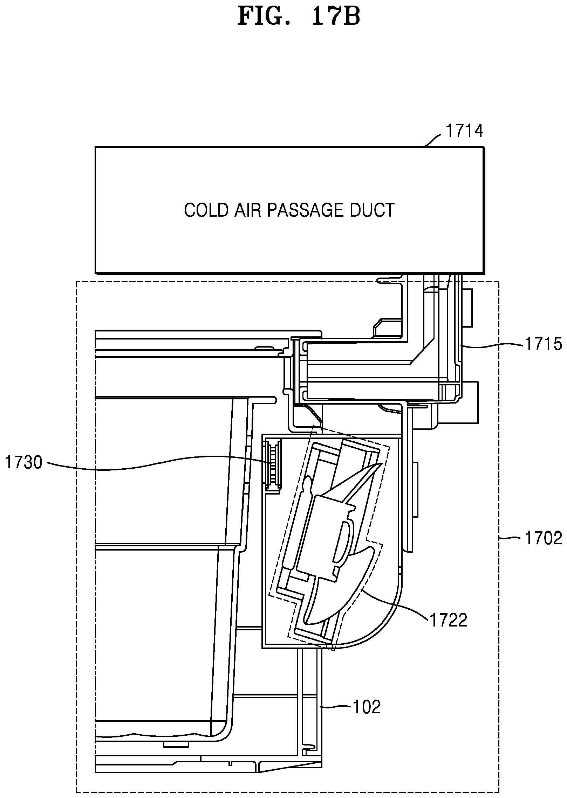

FIG. 17B is a cross-sectional view of an aging chamber and an aging chamber control module, according to an embodiment of the disclosure.

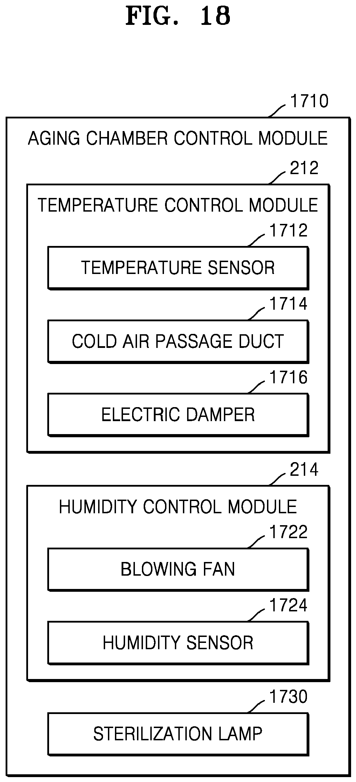

FIG. 18 is a block diagram of a structure of an aging chamber control module according to an embodiment of the disclosure.

The structures of the aging chamber and the aging chamber control module will now be described with reference to FIGS. 17A, 17B and 18. FIG. 17B is a cross-sectional view of a plane 1702 of FIG. 17A as viewed in an X direction. The plane 1702 is a plane including a sterilization lamp 1730, a blowing fan 1722, and a cold air passage 1715 disposed on a rear surface of the aging chamber 102.

Referring to FIGS. 17A, 17B and 18, the aging chamber 102 may receive cold air from a cold air passage duct 1714. The aging chamber 102 is connected to the cold air passage duct 1714 through a cold air passage 1715 through which cold air is supplied from the cold air passage duct 1714.

The cold air passage duct 1714 may cool the internal air of a refrigerating chamber or freezing chamber down to a set refrigerating temperature, and may supply the cooled internal air to the refrigerating chamber or freezing chamber. The aging chamber 102 may be connected to the cold air passage duct 1714 of the refrigerating chamber.

The cold air passage duct 1714 may include an electric damper 1716 that controls an air flow to the aging chamber 102. The electric damper 1716 may supply or block cold air to the aging chamber 102 in order to maintain the temperature of the aging chamber 102 at a set temperature. The electric damper 1716 may supply or block cool air to or from the aging chamber 102 according to a control signal of the processor 210.

The cold air passage duct 1714 and the electric damper 1716 correspond to the temperature control module 212.

According to an embodiment of the disclosure, the temperature control module 212 may further include a temperature sensor 1712. The temperature sensor 1712 measures an internal temperature of the aging chamber 102, and transmits a measured temperature value to the processor 210. The processor 210 controls the internal temperature of the aging chamber 102 by controlling the electric damper 1716, based on the measured temperature value. When the measured temperature value is lower than the set temperature, the processor 210 blocks the inflow of cold air from the electric damper 1716. When the measured temperature value is higher than the set temperature, the processor 210 opens the inflow of cold air from the electric damper 1716.

The aging chamber control module 1710 may include a humidity control module 214 for controlling an internal humidity of the aging chamber 102. The humidity control module 214 may include the blowing fan 1722 that circulates the internal air of the aging chamber 102. The blowing fan 1722 includes a rotating fan. The blowing fan 1722 may control an air circulation speed inside the aging chamber 102 to control the internal humidity of the aging chamber 102. When the speed of the blowing fan 1722 increases, the internal humidity decreases, and, when the speed of the blowing fan 1722 decreases, the internal humidity increases.

For raw meat drying, internal air circulation of 0.2 m/s to 2.0 m/s is needed. To this end, the blowing fan 1722 may be disposed on the rear surface of the aging chamber 102, and may cause a flow of the internal air of the aging chamber 102. The blowing fan 1722 secures a wind speed for drying raw meat.

According to an embodiment of the disclosure, the humidity control module 214 may include a humidity sensor 1724 that measures the internal humidity of the aging chamber 102. The humidity sensor 1724 measures the internal humidity of the aging chamber 102, and outputs a measured humidity value to the processor 210. The processor 210 may control the speed of the blowing fan 1722, based on the measured humidity value. When the measured humidity value is higher than a set humidity, the processor 210 increases the speed of the blowing fan 1722. When the measured humidity value is lower than a set humidity, the processor 210 decreases the speed of the blowing fan 1722.

According to an embodiment of the disclosure, the aging chamber control module 1710 may further include the sterilization lamp 1730. The sterilization lamp 1730 is disposed inside the aging chamber 102 and radiates sterilizing light to the meat product 101 disposed inside the aging chamber 102. The sterilizing light acts to sterilize and antibacterialize the meat product 101. The sterilizing light prevents the growth of microorganisms from occurring during the aging of the meat product 101. The sterilization lamp 1730 may include, for example, an ultraviolet-C (UV-C) lamp, a UV-C light emitting diode (LED), or an S-plasma ion (SPI) lamp.

The processor 210 may control the on/off of the sterilization lamp 1730 according to an aging mode. The processor 210 may turn on the sterilization lamp 1730 when the meat product 101 is aged, and turn off the sterilization lamp 1730 when the aging is not performed. The processor 210 may turn on the sterilization lamp 1730 when the meat product 101 is stored at a fixed temperature in the aging chamber 102, even when the meat product 101 is not aged.

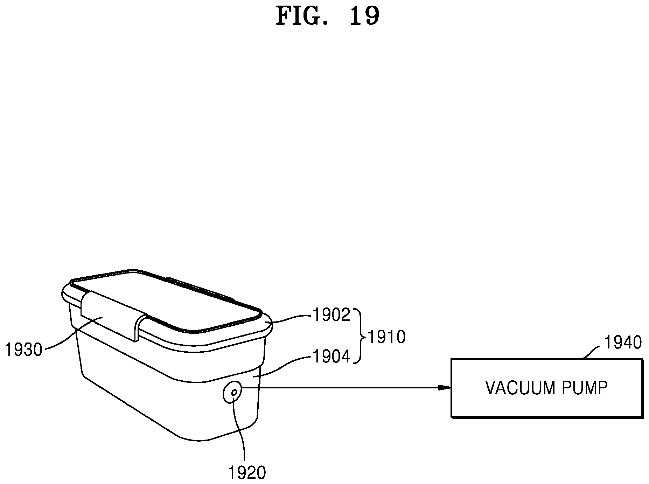

FIG. 19 is a view illustrating a vacuum box and a vacuum pump 1940 according to an embodiment of the disclosure.

Referring to FIG. 19, the aging chamber 102 may include a vacuum box 1910. The vacuum box 1910 has an internal space for storing the meat product 101 therein. The vacuum box 1910 includes a lid 1902 and a container 1904. The vacuum box 1910 is sealed when the lid 1902 and the container 1904 are fastened to each other. The inside of the vacuum box 1910 is sealed by fastening the lid 1902 to the container 1904 by using a fastening member 1930.

According to an embodiment of the disclosure, while the vacuum box 1910 is being sealed, the refrigerator 100 may remove an internal air of the vacuum box 1910 by using the vacuum pump 1940 to make the inside of the vacuum box 1910 into a vacuum state. The vacuum box 1910 may include a box vacuum hole 1920 connected to the vacuum pump 1940 through a hose. The box vacuum hole 1920 may include a check valve. The check valve opens when fastened to the hose, and closes when separated from the hose. The check valve may be electrically controlled or may be manually controlled. When the check valve is electrically controlled, the processor 210 may control opening and closing of the check valve according to an operation of the vacuum pump 1940.

When the vacuum pump 1940 is connected to the vacuum box 1910, the vacuum pump 1940 may suck the internal air of the vacuum box 1910. The vacuum box 1910 is turned on/off under a control by the processor 210, and thus the vacuum pump 1940 sucks the internal air.

When the aging chamber 102 includes the vacuum box 1910, the aging chamber control module 1710 controls the internal temperature and internal humidity of the vacuum box 1910. The sterilization lamp 1730 may be disposed inside the vacuum box 1910.

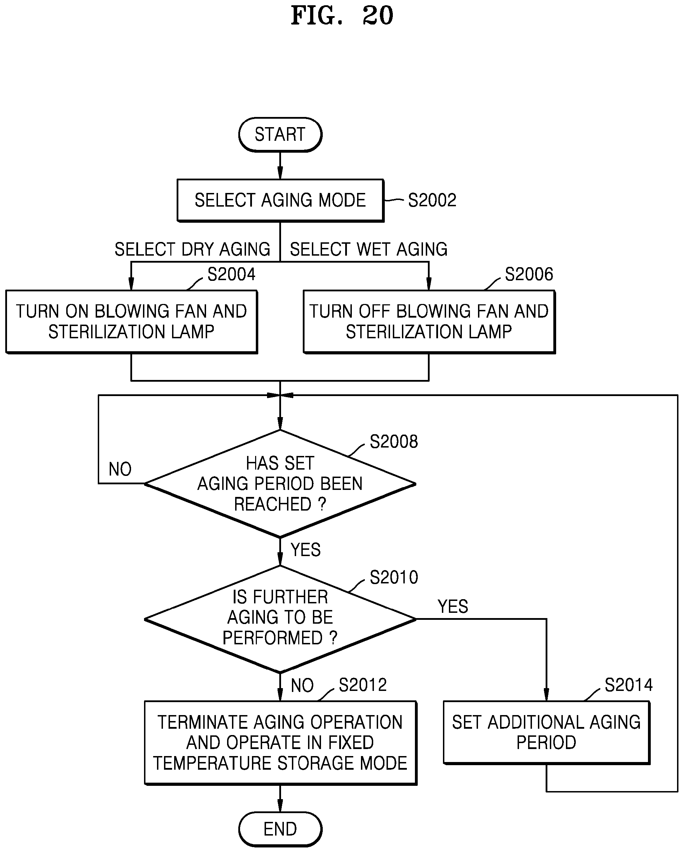

FIG. 20 is a flowchart of a process of selecting an aging method and conducting aging, according to an embodiment of the disclosure.

According to an embodiment of the disclosure, the refrigerator 100 provides a dry aging method and a wet aging method when aging the meat product 101. The refrigerator 100 may control the aging chamber control module 1710 according to a selected aging method.

Referring to FIG. 20, in operation S2002, the refrigerator 100 receives a user input for selecting an aging mode. The user input may be input through the input/output interface of the refrigerator 100 or may be input through the input/output interface 234 of the external device 130.

When a dry aging mode is selected, the refrigerator 100 turns on the blowing fan 1722 and the sterilization lamp 1730 in operation S2004. In the dry aging mode, because the meat product 101 is put into the aging chamber 102 in an exposed state, the blowing fan 1722 is turned on to dry the surface of the meat product 101. In order to suppress the growth of microorganisms in the meat product 101 during dry aging, the sterilization lamp 1730 is turned on.

When a wet aging mode is selected, the refrigerator 100 turns off the blowing fan 1722 and the sterilization lamp 1730 in operation S2006. In the wet aging mode, because the meat product is put into the aging chamber 102 in a vacuum-packed state, it is not necessary to operate the blower fan 1722. For convenience of control, the refrigerator 100 may turn off the blowing fan 1722 and the sterilization lamp 1730 together. However, the blowing fan 1722 and the sterilization lamp 1730 may be turned on in the wet aging mode. Thus, according to an embodiment of the disclosure, the refrigerator 100 in the wet aging mode may turn on the blowing fan 1722 and the sterilization lamp 1730.

Next, the refrigerator 100 determines whether a set aging period has been reached, in operation S2008. According to an embodiment of the disclosure, the aging period may be automatically set to the date of aging at a certain aging level. According to an embodiment of the disclosure, the aging period may be set by a user. For example, when the user sets a desired aging level or desired recipe, the refrigerator 100 sets a period when the user's desired aging level is reached as the aging period. For example, when the user selects a desired target date, the refrigerator 100 sets the date selected by the user as the aging period.

When the aging period is reached, the refrigerator 100 determines whether to perform further aging, in operation S2010. The refrigerator 100 determines whether to perform further aging, based on a user input. The user input may be input through the input/output interface of the refrigerator 100 or may be input through the input/output interface 234 of the external device 130.

When further aging is performed, the refrigerator 100 sets an additional aging period, in operation S2014. According to an embodiment of the disclosure, the refrigerator 100 sets the additional aging period as a pre-determined period. According to an embodiment of the disclosure, the refrigerator 100 sets the additional aging period, based on a user input. The user input may be input through the input/output interface of the refrigerator 100 or may be input through the input/output interface 234 of the external device 130.

When additional aging is not performed, in operation S2012, the refrigerator 100 terminates an aging operation and operates in a fixed temperature storage mode. In the fixed temperature storage mode, the aging chamber 102 is maintained at a lower temperature than in the aging mode. For example, in the fixed temperature storage mode, the aging chamber 102 may be maintained at -1 °Cbelow zero, and the blowing fan 1722 may be stopped.

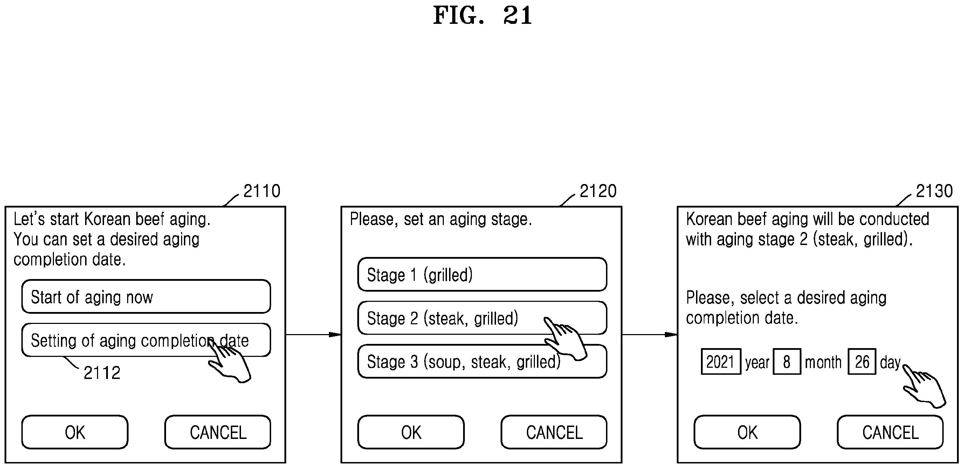

FIG. 21 is a view illustrating a process of setting a target aging date, according to an embodiment of the disclosure.

Referring to FIG. 21, when a user sets a target aging date for meat aging, the refrigerator 100 performs an aging operation so that aging is completed on the target set date. The refrigerator 100 or the external device 130 provides an aging date setting GUI through which the user may set the target setting date.

In operation 2110, the aging date setting GUI provides a target aging date setting menu 2112 through which the user may set the target aging date. When the user selects the target aging date setting menu 2112, the aging date setting GUI provides a menu through which the user may set a target aging level, in operation 2120. The aging date setting GUI may provide information about recipes (e.g., grilled, steak, and soup) respectively suitable for aging stages, in the target aging level setting menu.

When the user selects the target aging level in operation 2120, the aging date setting GUI provides a menu for setting the target aging date on which to complete the aging with the target aging level, in operation 2130. The user may designate the target aging date, in operation 2130.

The refrigerator 100 may adjust a temperature and a blowing fan speed according to the target aging date set in operation 2130. The refrigerator 100 may increase the set temperature of the aging chamber 102 and increase the speed of the blowing fan 1722 to increase the aging speed, and may decrease the set temperature and lower the speed of the blowing fan 1722 to decrease the aging speed. According to an embodiment of the disclosure, the refrigerator 100 may determine the set temperature and the speed of the blowing fan 1722 according to the target setting date, by using the AI model 1030 described above. According to an embodiment of the disclosure, the refrigerator 100 may determine the set temperature and the speed of the blowing fan 1722 according to the target setting date, based on Equation 1 described above.

The sensory characteristics (tenderness) of Korean beef are 5.5 points when aged for 14 days at 0°C and 5.53 points when aged for 7 days at 4°C, and there is a one week difference in the aging period according to a difference in the aging temperature. As a result of examining a shear force according to the aging of Korean beef, the shear force of Korean beef aged at 4°C for 14 days was significantly lower than that of Korean beef aged at 0°C for 28 days, and showed a soft texture. This phenomenon is because a period during which collapse of a Z-disk of Korean beef, that is, a microstructural change of Korean beef, appears varies according to the aging temperature. The Z-disk collapse, which is a phenomenon in which a myofibrillar tissue is decomposed, increases the year of Korean beef. Therefore, as the Z-disk collapses, the tissue of Korean beef becomes soft, and this phenomenon corresponds to the aging of Korean beef. Because the aging speed is significantly changed according to the aging temperature as described above, the refrigerator 100 may adjust the aging period by controlling the set temperature of the aging chamber 102 between 0°C and 4°C.

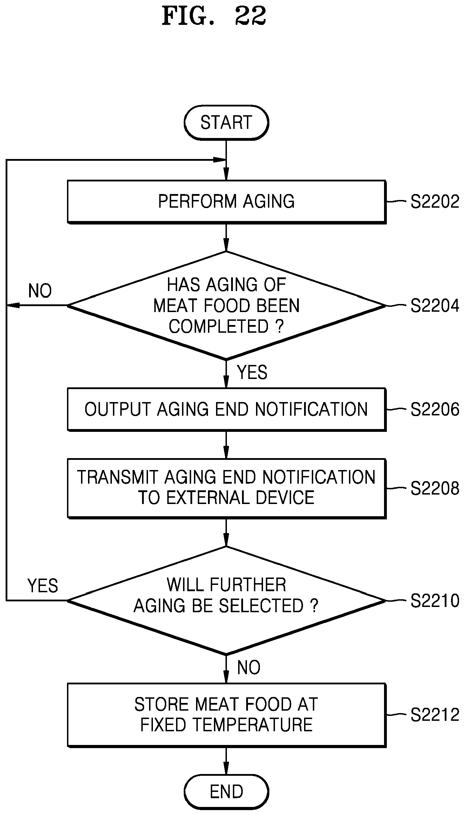

FIG. 22 is a flowchart of an aging termination process and a notification providing process, according to an embodiment of the disclosure.

According to an embodiment of the disclosure, the refrigerator 100 may output an aging end notification when aging is completed. When the aging is completed, the refrigerator 100 may switch to a fixed temperature storage mode to stop the aging of the meat product 101.

Referring to FIG. 22, in operation S2202, the refrigerator 100 performs aging while operating in the aging mode. In operation S2204, the refrigerator 100 determines whether the aging of the meat product 101 has been completed. When the aging of the meat product 101 has been completed, the refrigerator 100 outputs the aging end notification, in operation S2206. The refrigerator 100 outputs the aging end notification to the external device 130. In operation S2208, the refrigerator 100 may transmit the aging end notification to the external device 130 through the IoT server 1610.

Next, in operation S2210, the refrigerator 100 receives a user input for determining whether to proceed with further aging. The user input may be input through the input/output interface of the refrigerator 100 or may be input through the input/output interface 234 of the external device 130.

When a user input of selecting additional aging is received, the refrigerator 100 returns to operation S2202 to perform additional aging. When additional aging is performed, as described above with reference to FIG. 20, the setting of the additional aging period in operation S2014 may be added.

When it is determined that additional aging is not performed, the refrigerator 100 stores the meat product 101 at a fixed temperature, in operation S2212.

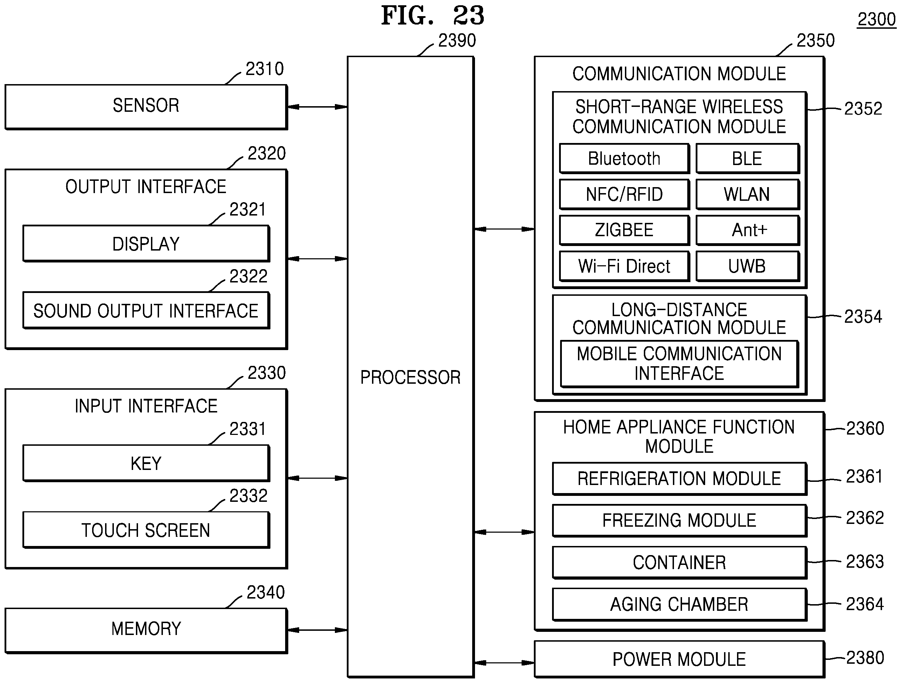

FIG. 23 is a block diagram of a refrigerator 2300 according to an embodiment of the disclosure.

Referring to FIG. 23, the refrigerator 100 according to an embodiment of the disclosure may correspond to the refrigerator 2300. The refrigerator 2300 according to an embodiment of the disclosure includes a sensor 2310, an output interface 2320, an input interface 2330, a memory 2340, a communication module 2350, a home appliance function module 2360, a power module 2380, and a processor 2390. The refrigerator 2300 may be configured with various combinations of the components shown in FIG. 23, and not all of the components shown in FIG. 23 are essential.

The refrigerator 2300 of FIG. 23 corresponds to the refrigerator 100 described above with reference to FIG. 2, the memory 2340 of FIG. 23 corresponds to the memory 218 described above with reference to FIG. 2, the processor 2390 of FIG. 23 corresponds to the processor 210 described above with reference to FIG. 2, the communication module 2350 of FIG. 23 corresponds to the communication module 216 described above with reference to FIG. 2, the refrigeration module 2361 of FIG. 23 corresponds to the temperature control module 212 and the humidity control module 214 described above with reference to FIG. 2, and the aging chamber 2364 of FIG. 23 corresponds to the aging chamber 102 described above with reference to FIG. 2.

The sensor 2310 may include various types of sensors. For example, the sensor 2310 may include various types of sensors such as an image sensor, an infrared sensor, an ultrasonic sensor, a lidar sensor, a human sensor, a motion detection sensor, a proximity sensor, and an illuminance sensor. Functions of most of the sensors would be instinctively understood by one of ordinary skill in the art in view of their names and thus detailed descriptions thereof will be omitted herein.

The output interface 2320 may include a display 2321 and a speaker 2322. The output interface 2320 outputs various notifications, messages, pieces of information, etc. generated by the processor 2390.

The input interface 2330 may include a key 2331 and a touch screen 2332. The input interface 2330 receives a user input and transmits the user input to the processor 2390.

The memory 2340 stores various pieces of information, data, instructions, programs, etc. necessary for operations of the refrigerator 2300. The memory 2340 may include one or both of volatile memory and nonvolatile memory, or a combination thereof. The memory 2340 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The refrigerator 2300 may operate a web storage or a cloud server on the Internet which performs a storage function.

The communication module 2350 may include at least one of a short-range wireless communication module 2352 or a long-distance communication module 2354, or a combination thereof. The communication module 2350 may include at least one antenna for communicating with other devices wirelessly.

The short-range wireless communication module 2352 may include, but is not limited to, a Bluetooth communication interface, a Bluetooth Low Energy (BLE) communication interface, a Near Field Communication (NFC) interface, a WLAN (Wi-Fi) communication interface, a Zigbee communication interface, an infrared Data Association (IrDA) communication interface, a Wi-Fi Direct (WFD) communication interface, a ultrawideband (UWB) communication interface, an Ant+ communication interface, and a micro-wave (uWave) communication interface.

The long-distance communication module 2354 may include a communication module for performing various types of long-distance communication, and may include a mobile communication interface. The mobile communication interface transmits or receives a wireless signal to or from at least one of a base station, an external terminal, or a server on a mobile communication network. Here, examples of the wireless signal may include a voice call signal, a video call signal, and various types of data according to text/multimedia message exchange.

The home appliance function module 2360 includes an operation module that performs an original function of the refrigerator 2300. The home appliance function module 2360 may include a refrigeration module 2361, a freezing module 2362, a container 2363, and an aging chamber 2364.

The power module 2380 is connected to a power source to supply power to the refrigerator 2300.

The processor 2390 may control all operations of the refrigerator 2300. The processor 2390 may control the components of the refrigerator 2300 by executing the programs stored in the memory 2340.

According to an embodiment of the disclosure, the processor 2390 may include a separate NPU for performing an operation of an AI model. The processor 2390 may also include a CPU and a GPU.

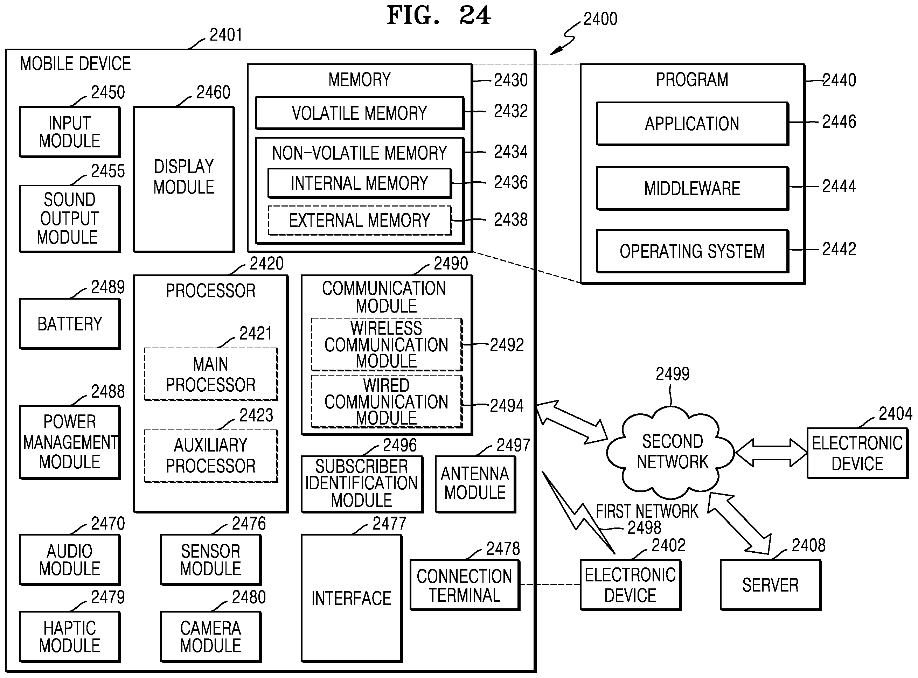

FIG. 24 is a block diagram of a mobile device 2401 in a network environment 2400, according to an embodiment of the disclosure.

The mobile device 2401 of FIG. 24 may correspond to the external device 130 described above. The meat information server 120 of FIG. 2 and the IoT server 1610 may correspond to a server 2408, and the refrigerator 100 may correspond to an electronic device 2402 or an electronic device 2404.

Referring to FIG. 24, in the network environment 2400, the mobile device 2401 may communicate with the electronic device 2402 through a first network 2498 (e.g., a short-range wireless communication network), or may communicate with the electronic device 2404 and/or the server 2408 through a second network 2499 (e.g., a long-range wireless communication network). According to an embodiment of the disclosure, the mobile device 2401 may communicate with the electronic device 2404 via the server 2408. According to an embodiment of the disclosure, the mobile device 2401 may include a processor 2420, a memory 2430, an input module 2450, a sound output module 2455, a display module 2460, an audio module 2470, a sensor module 2476, an interface 2477, a connection terminal 2478, a haptic module 2479, a camera module 2480, a power management module 2488, a battery 2489, a communication module 2490, a subscriber identification module 2496, or an antenna module 2497. In some embodiments of the disclosure, at least one (e.g., the connection terminal 2478) of these components may be omitted, or one or more other components may be added to the mobile device 2401. In some embodiments of the disclosure, some (e.g., the sensor module 2476, the camera module 2480, or the antenna module 2497) of these components may be integrated into one component (e.g., the display module 2460).

The processor 2420 may control one or more other components (e.g., hardware or software components) of the mobile device 2401 connected to the processor 2420 by executing software (e.g., a program 2440), and may perform various data processing or calculations. According to an embodiment of the disclosure, as part of the data processing or calculations, the processor 2420 may load, in a volatile memory 2432, commands or data received from another component (e.g., the sensor module 2476 or the communication module 2490), process the command or data stored in the volatile memory 2432, and store result data in a non-volatile memory 2434. The non-volatile memory 2434 may include an internal memory 2436 and an external memory 2438. According to an embodiment of the disclosure, the processor 2420 may include a main processor 2421 (e.g., a CPU or an application processor) and an auxiliary processor 2423 (e.g., a GPU, an NPU, an image signal processor, a sensor hub processor, or a communication processor) that is operable independently of or together with the main processor 2421. For example, when the mobile device 2401 includes the main processor 2421 and the auxiliary processor 2423, the auxiliary processor 2423 may use less power than the main processor 2421, or may be set to be specialized for a specified function. The auxiliary processor 2423 may be implemented separately from or as part of the main processor 2421.

Instead of the main processor 2421 when the main processor 2421 is in an inactive state (e.g., a sleep state), or together with the main processor 2421 when the main processor 2421 is in an active state (e.g., an application execution state), the auxiliary processor 2423 may control at least some of the functions or states related to at least one component (e.g., the display module 2460, the sensor module 2476, or the communication module 2490) of the components of the mobile device 2401. According to an embodiment of the disclosure, the auxiliary processor 2423 (e.g., an image signal processor or a communication processor) may be implemented as a part of functionally related other components (e.g., the camera module 2480 or the communication module 2490). According to an embodiment of the disclosure, the auxiliary processor 2423 (e.g., a neural network processing device) may include a hardware structure specialized in processing an AI model. The AI model may be created through machine learning. Such learning may be performed in the mobile device 2401 on which the AI model is performed, or may be performed through a separate server (e.g., the server 2408). Examples of a learning algorithm include, but are not limited to, supervised learning, unsupervised learning, semi-supervised learning, or reinforcement learning. The AI model may include a plurality of neural network layers. The DNN may be, but is not limited to, a Deep Neural Network (DNN), a Convolutional Neural Network (CNN), a Recurrent Neural Network (RNN), a Restricted Boltzmann Machine (RBM), a Deep Belief Network (DBN), a Bidirectional Recurrent Deep Neural Network (BRDNN), or Deep Q-Networks, or a combination thereof. The AI model may include, additionally or alternatively, a software structure in addition to the hardware structure.

The memory 2430 may store various data used by at least one component of the mobile device 2401 (e.g., the processor 2420 or the sensor module 2476). The data may include, for example, software (e.g., the program 2440) and input data or output data about commands related to the software. The memory 2430 may include the volatile memory 2432 or the non-volatile memory 2434.

The program 2440 may be stored as software in the memory 2430, and may include, for example, an operating system 2442, middleware 2444, or an application 2446.

The input module 2450 may receive a command or data to be used for a component (e.g., the processor 2420) of the mobile device 2401, from the outside (e.g., a user) of the mobile device 2401. The input module 2450 may include, for example, a microphone, a mouse, a keyboard, a key (e.g., a button), or a digital pen (e.g., a stylus pen).

The sound output module 2455 may output an audio signal to the outside of the mobile device 2401. The sound output module 2455 may include, for example, a speaker or a receiver. The speaker may be used for general purposes such as multimedia playback or recording playback. The receiver may be used to receive incoming calls. According to an embodiment of the disclosure, the receiver may be implemented separately from or as part of the speaker.

The display module 2460 may visually provide information to the outside (e.g., a user) of the mobile device 2401. The display module 2460 may include, for example, a display, a hologram device, or a projector, and a control circuit to control a corresponding device. According to an embodiment of the disclosure, the display module 2460 may include a touch sensor configured to sense a touch, or a pressure sensor configured to measure the intensity of a force generated by the touch.

The audio module 2470 may convert sound into electrical signals or reversely electrical signals into sound. According to an embodiment of the disclosure, the audio module 2470 may obtain sound through the input module 2450, or may output sound through the sound output module 2455 or external electronic device (e.g., the electronic device 2402) (e.g., a speaker or headphone) connected to the mobile device 2401 directly or wirelessly.

The sensor module 2476 may detect an operation state (e.g., power or a temperature) of the mobile device 2401, or an external environment state (e.g., a user state), and may generate an electrical signal or data value corresponding to a detected state. The sensor module ED76 may include a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2477 may support one or a plurality of specified protocols that may be used for the mobile device 2401 to be connected to another electronic device (e.g., the electronic device 2402) directly or wirelessly. According to an embodiment of the disclosure, the interface 2477 may include, for example, a high definition multimedia interface (HDMI), a universal serial bus (USB) interface, an SD card interface, or an audio interface.

The connection terminal 2478 may include a connector through which the mobile device 2401 may be physically connected to another electronic device (e.g., the electronic device 2402). According to an embodiment of the disclosure, the connection terminal 2478 may include, for example, an HDMI connector, a USB connector, an SD card connector, or an audio connector (e.g., a headphone connector).

The haptic module 2479 may convert electrical signals into mechanical stimuli (e.g., vibrations or movements) or electrical stimuli that are perceivable by a user through tactile or motor sensations. According to an embodiment of the disclosure, the haptic module 2479 may include, for example, a motor, a piezoelectric device, or an electrical stimulation device.

The camera module 2480 may capture a still image and a video. According to an embodiment of the disclosure, the camera module 2480 may include one or more lenses, image sensors, image signal processors, or flashes.

The power management module 2488 may manage the power supplied to the mobile device 2401. According to an embodiment of the disclosure, the power management module 2488 may be implemented as at least a part of a power management integrated circuit (PMIC).

The battery 2489 may supply power to at least one of the components of the mobile device 2401. According to an embodiment of the disclosure, the battery 2489 may include non-rechargeable primary cells, rechargeable secondary cells, or fuel cells.

The communication module 2490 may establish a direct (e.g., wired) communication channel and/or a wireless communication channel between the mobile device 2401 and another electronic device (e.g., the electronic device 2402, the electronic device 2404, or the server 2408), and may support a communication through an established communication channel. The communication module 290 may be operated independently of the processor 2420 (e.g., an application processor), and may include one or a plurality of communication processors supporting a direct (e.g., wired) communication and/or a wireless communication. According to an embodiment of the disclosure, the communication module 2490 may include a wireless communication module 2492 (e.g., a cellular communication module, a short-range wireless communication module, or a global navigation satellite system (GNSS) communication module), or a wired communication module 2494 (e.g., a local area network (LAN) communication module or a power line communication module). Among the above communication modules, a corresponding communication module may communicate with the electronic device 2404 through the first network 2498 (e.g., a short-range communication network such as Bluetooth, WiFi Direct, or infrared data association (IrDA)) or the second network 2499 (e.g., a long-range communication network such as a cellular network, a 5G network, a next generation network, the Internet, or a computer network (e.g., LAN or WAN)). These various types of communication modules may be integrated into one component (e.g., a single chip), or may be implemented as a plurality of separate components (e.g., multiple chips). The wireless communication module 2492 may verify or authenticate the mobile device 2401 in a communication network such as the first network 2498 or the second network 2499 by using subscriber information (e.g., an international mobile subscriber identifier (IMSI)) stored in the subscriber identification module 2496.

The wireless communication module 2492 may support a 5G network after a fourth generation (4G) network and a next-generation communication technology, for example, a new radio (NR) access technology. The NR access technology is high-speed transmission of high-capacity data (e.g., an enhanced mobile broadband (eMBB)), terminal power minimization and access of multiple terminals (e.g., massive machine type communications (mMTC)), or high reliability and low latency (e.g., ultra-reliable and low-latency communications (URLLC)). The wireless communication module 2492 may support a high frequency band (e.g., mmWave band) in order to achieve a high data rate, for example. The wireless communication module 2492 may support various technologies for securing performance in a high-frequency band, for example, beamforming, massive multiple-input and multiple-output (MIMO), full dimensional MIMO (FD-MIMO), array antenna, analog beamforming, or large scale antenna. The wireless communication module 2492 may support various requirements specified in the mobile device 2401, an external electronic device (e.g., the electronic device 2404), or a network system (e.g., the second network 2499). According to an embodiment of the disclosure, the wireless communication module 2492 may support a peak data rate (e.g., 20 Gbps or more) for realizing eMBB, a loss coverage (e.g., 164 dB or less) for realizing mMTC, or a U-plane latency (e.g., each of a downlink (DL) and an uplink (UL) having 0.5 ms or less or a round trip of 1 ms or less) for realizing URLLC.

The antenna module 2497 may transmit signals or power to the outside (e.g., another electronic device) or receive signals or power from the outside. According to an embodiment of the disclosure, the antenna module 2497 may include an antenna including a conductor formed on a substrate (e.g., a printed circuit board (PCB)) or a radiator formed of a conductive pattern. According to an embodiment of the disclosure, the antenna module 2497 may include a plurality of antennas (e.g., an array antenna). In this case, at least one antenna suitable for a communication scheme used in a communication network such as the first network 2498 or the second network 2499 may be selected from the plurality of antennas by, for example, the communication module 2490. Signals or power may be transmitted or received between the communication module 2490 and another electronic device through the selected at least one antenna. According to some embodiments of the disclosure, other components (e.g., a radio frequency integrated circuit (RFIC)) other than the radiator may be additionally formed as a part of the antenna module 2497. According to various embodiments of the disclosure, the antenna module 2497 may form a mmWave antenna module. According to an embodiment of the disclosure, the mmWave antenna module may include a PCB, an RFIC disposed on or adjacent to a first side (e.g., a bottom surface) of the PCB and capable of supporting a designated high frequency band (e.g., an mmWave band), and a plurality of antennas (e.g., an array antenna) disposed on or adjacent to a second side (e.g., a top or lateral surface) of the PCB and capable of transmitting or receiving signals of the designated high frequency band.

At least some of the components may be connected to each other through a communication method between peripheral devices (e.g., a bus, general purpose input and output (GPIO), a serial peripheral interface (SPI), or a mobile industry processor interface (MIPI)) and may mutually exchange signals (e.g., commands or data).

According to an embodiment of the disclosure, the commands or data may be transmitted or received between the mobile device 2401 and the electronic device 2404 through the server 2408 connected to the second network 2499. Each of the electronic devices 2402 and 2404 may be of the same type as or a different type from the mobile device 2401. According to an embodiment of the disclosure, all or some of operations executed in the mobile device 2401 may be executed in one or a plurality of the external electronic devices, namely, the electronic devices 2402 and 2404 and the server 2408. For example, when the mobile device 2401 needs to perform a function or service automatically or in response to a request from a user or another device, the mobile device 2401 may request one or a plurality of electronic devices to perform part or the whole of the function or service, instead of performing the function or service or in addition to performing the function or service. The one or plurality of the electronic devices receiving the request may execute at least a portion of the requested function or service or an additional function or service related to the request, and may transmit a result of the execution to the mobile device 2401. The mobile device 2401 may process the received result without changes or additionally, and provide a processed result as at least a portion of a response to the request. To this end, for example, cloud computing, distributed computing, mobile edge computing (MEC), or client-server computing may be used. The mobile device 2401 may provide ultra-low latency services by using, for example, the distributed computing or the MEC. According to an embodiment of the disclosure, the electronic device 2404 may include an Internet of things (IoT) device. The server 2408 may be an intelligent server using machine learning and/or neural networks. According to an embodiment of the disclosure, the electronic device 2404 or the server 2408 may be included in the second network 2499. The mobile device 2401 is applicable to intelligent services based on the 5G communication technology and the IoT related technology (e.g., smart home, smart city, smart car, or health care).

The term "module", as used herein, may include a unit implemented as hardware, software, or firmware. For example, the term "module" may be interchangeably used with the term a "logic", a "logical block", a "component", or a "circuit". The "module" may be an integrally formed component, a minimum unit of the component performing one or more functions, or a part of the minimum unit. For example, according to an embodiment of the disclosure, the "module" may be implemented in the form of an application-specific integrated circuit (ASIC).

Various embodiments of this document may be implemented as software (e.g., a program) including one or more instructions stored in a storage medium readable by a machine (e.g., the refrigerator 100 or the external device 130). For example, a processor of the machine (e.g., the refrigerator 100 or the external device 130) may call at least one instruction among one or more instructions stored from the storage medium and execute the at least one instruction. This makes it possible for the machine to be operated to perform at least one function according to the called at least one instruction. Examples of the one or more instructions may include codes created by a compiler, or codes executable by an interpreter. A machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored.

According to an embodiment of the disclosure, a method according to various disclosed embodiments may be provided by being included in a computer program product. Computer program products are commodities and thus may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. When distributed online, at least part of the computer program product may be temporarily generated or at least temporarily stored in a machine-readable storage medium, such as a memory of a manufacturer's server, a server of the application store, or a relay server.

According to various embodiments of the disclosure, one or more components or operations among the above-described corresponding components may be omitted, or one or more other components or operations may be added. Alternatively or additionally, a plurality of components (e.g., a module or a program) may be integrated into one component. In this case, the integrated component may perform one or more functions of each of the plurality of components in the same or similar manner as or to those performed by the corresponding component among the plurality of components prior to the integration. According to various embodiments of the disclosure, operations performed by modules, programs, or other components may be executed in a sequential, parallel, iterative, or heuristic manner. Alternatively, one or more of the operations may be performed in a different order or may not be performed, or one or more other operations may be added.

Provided is a control method of a refrigerator. The control method includes obtaining identification information of meat product. The control method also includes obtaining slaughter date information of the meat product, based on the identification information of the meat product. The control method also includes obtaining part information of meat product. The control method also includes generating aging information including an aging level for each aging period of the meat product, based on the obtained slaughter date information and the obtained part information. The control method also includes outputting the aging information. The control method also includes aging the meat product at a set temperature and a set humidity.

According to an embodiment of the disclosure, the obtaining of the slaughter date information includes transmitting a slaughter date information request including the identification information to a meat information server, and receiving the slaughter date information with respect to the slaughter date information request from the meat information server.

According to an embodiment of the disclosure, the obtaining of the identification information of the meat product includes receiving the identification information of the meat product from an external device that communicates with the refrigerator, and the obtaining of the slaughter date information includes receiving the slaughter date information from the external device.

According to an embodiment of the disclosure, the obtaining of the part information includes receiving the part information of the meat product from the external device that communicates with the refrigerator.

According to an embodiment of the disclosure, the refrigerator includes an aging chamber included in a refrigerating chamber, and the control method further includes receiving target aging date information of the meat product, and controlling a temperature and humidity of the aging chamber, based on the target aging date information.

According to an embodiment of the disclosure, the target aging date information includes at least one of a target date, a recipe, or a cooking method.

According to an embodiment of the disclosure, the generating of the aging information includes determining at least one constant of an aging level prediction formula, based on the part information, and calculating an aging level according to a date or period by inputting an aging date into the aging level prediction formula.

According to an embodiment of the disclosure, the generating of the aging information includes inputting an aging date, part information, an aging temperature, and a blowing fan speed into an artificial intelligence (AI) model, and obtaining aging level information output by the AI model.

According to an embodiment of the disclosure, the outputting of the aging information includes outputting aging information including a recipe for an aging period.

According to an embodiment of the disclosure, the control method further includes transmitting the identification information of the meat product and the aging level information to a cooking appliance that communicates with the refrigerator.

According to an embodiment of the disclosure, the control method further includes receiving an aging method selection input for selecting one of dry aging or wet aging as an aging method. The aging includes determining a method of control of the humidity according to the aging method selected by the aging method selection input.

According to an embodiment of the disclosure, the refrigerator includes an aging chamber included in a refrigerating chamber; a temperature control module configured to control a temperature of the aging chamber;

and a blowing fan configured to control an air flow in the aging chamber, and the aging includes, when the dry aging is selected, operating the blowing fan at a set speed, and, when the wet aging is selected, stopping an operation of the blowing fan.

According to an embodiment of the disclosure, the refrigerator includes a vacuum box sealed by fastening a box cover and including a box vacuum hole connected to a vacuum pump; a vacuum pump connected to the box vacuum hole to maintain a vacuum state inside the vacuum box; a temperature control module configured to control a temperature of the vacuum box; and a blowing fan configured to control an air flow in the vacuum box, and the aging includes, when the dry aging is selected, operating the blowing fan at a set speed, and stopping an operation of the vacuum pump; and, when the wet aging is selected, stopping an operation of the blowing fan and maintaining a vacuum state inside the vacuum box by the vacuum pump.

According to an embodiment of the disclosure, the control method further includes outputting an aging end notification when aging of the meat product is completed; and transmitting the aging end notification to a mobile device that communicates with the refrigerator.

According to an embodiment of the disclosure, the control method further includes, when the aging of the meat product is completed, performing an operation of storing the meat product at a fixed temperature, and at least one of a set temperature or a set humidity is changed in the fixed temperature storing operation.

According to an embodiment of the disclosure, the control method further includes receiving a mode selection input for selecting one of additional aging of the meat product or fixed temperature storage of the meat product; when the additional aging of the meat product is selected by the mode selection input, performing the aging; and, when the fixed temperature storage of the meat product is selected by the mode selection input, performing the fixed temperature storing operation, wherein at least one of a set temperature or a set humidity is changed in the fixed temperature storing operation.

According to an embodiment of the disclosure, the control method further includes requesting a server for recipe information corresponding to the aging information; and outputting the recipe information received from the server.

According to an embodiment of the disclosure, the ageing level is defined as one of predefined candidate aging levels.

According to an embodiment of the disclosure, the aging level is generated by matching an aging level value with one of the predefined candidate aging levels according to a predetermined criterion.

According to an embodiment of the disclosure, the ageing level value is converted into the ageing level using a lookup table, and the lookup table defines the aging level as one of the predefined candidate aging levels based on a range of aging levels.

Provided is a refrigerator. The refrigerator includes an aging chamber included in a refrigerating chamber. The refrigerator also includes a temperature control module configured to control a temperature of the aging chamber. The refrigerator also includes a humidity control module configured to control a humidity of the aging chamber, and a communication module. The refrigerator also includes a memory storing at least one instruction. The refrigerator also includes at least one processor connected to the memory. The at least one processor is configured to execute the at least one instruction to obtain identification information of meat product, obtain slaughter date information of the meat product, based on the identification information of the meat, obtain part information of the meat product, generate aging information including an aging level for each aging period of the meat product, based on the obtained slaughter date information and the obtained part information, output the aging information, and age the meat product at a set temperature and a set humidity.

Provided is a non-transitory computer-readable recording medium having recorded thereon a computer program, which, when executed by a computer, performs the control method.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. A control method of a refrigerator(100), the control method comprising:

   obtaining identification information of a meat product;
   obtaining slaughter date information of the meat product, based on the identification information of the meat product;
   obtaining part information of the meat product;
   generating aging information including an aging level for each aging period of the meat product, based on the obtained slaughter date information and the obtained part information;
   outputting the aging information; and
   aging the meat product at a set temperature and a set humidity.

2. The control method of claim 1, wherein the obtaining of the slaughter date information comprises:

   transmitting a slaughter date information request comprising the identification information to a meat information server(120); and
   receiving the slaughter date information with respect to the slaughter date information request, from the meat information server(120).

3. The control method of any one of claims 1 to 2,

   wherein the obtaining of the identification information of the meat product comprises receiving the identification information of the meat product from an external device(110) communicating with the refrigerator(100), and
   wherein the obtaining of the slaughter date information comprises receiving the slaughter date information from the external device (110).

4. The control method of claim 3, wherein the obtaining of the part information comprises receiving the part information of the meat from the external device (110).

5. The control method of any one of claims 1 to 4,

   wherein the refrigerator (100) comprises an aging chamber (102) included in a refrigerating chamber (106), and
   wherein the control method further comprises:
   receiving target aging date information of the meat product; and
   controlling temperature and humidity of the aging chamber (102), based on the target aging date information.

6. The control method of claim 5, wherein the target aging date information includes at least one of a target date, a recipe, or a cooking method.

7. The control method of any one of claims 1 to 6, wherein the generating of the aging information comprises:

   determining at least one constant of an aging level prediction formula, based on the part information; and
   calculating the aging level according to a date or period by inputting an aging date into the aging level prediction formula.

8. The control method of any one of claims 1 to 7, wherein the generating of the aging information comprises:

   inputting an aging date, part information, an aging temperature, and a blowing fan speed into an artificial intelligence (AI) model (1030); and
   obtaining the aging information output by the AI model (1030).

9. The control method of any one of claims 1 to 8, wherein the outputting of the aging information comprises outputting aging information including a recipe for an aging period.

10. The control method of any one of claims 1 to 9, further comprising transmitting the identification information of the meat product and the aging level information to a cooking appliance (1620)communicating with the refrigerator (100).

11. The control method of any one of claims 1 to 10, further comprising:

receiving an aging method selection input for selecting one of dry aging or wet aging as an aging method,
wherein the aging comprises determining a method of control of humidity according to the aging method selected by the aging method selection input.

12. The control method of claim 11,

wherein the refrigerator (100)comprises:

an aging chamber (102)included in a refrigerating chamber (106);
a temperature control module configured to control a temperature of the aging chamber (102); and
a blowing fan (1722)configured to control an air flow in the aging chamber (102), and

wherein the aging comprises:

when the dry aging as an aging method is selected, operating the blowing fan (1722)at a set speed; and
when the wet aging as an aging method is selected, stopping operation of the blowing fan (1722).

13. The control method of claim 11,
wherein the refrigerator (100)comprises:

a vacuum box (1910)sealed by fastening a box cover and including a box vacuum hole (1920)connected to a vacuum pump (1940);
a vacuum pump (1940)connected to the box vacuum hole (1920)to maintain a vacuum state inside the vacuum box (1910);
a temperature control module (212)configured to control a temperature of the vacuum box (1910); and
a blowing fan (1722)configured to control an air flow in the vacuum box (1910), and
wherein the aging comprises:

when the dry aging is selected, operating the blowing fan (1722) at a set speed, and stopping operation of the vacuum pump (1940); and
when the wet aging is selected, stopping operation of the blowing fan (1722)and maintaining a vacuum state inside the vacuum box (1910)by the vacuum pump (1940).

14. The control method of any one of claims 1 to 13, further comprising:

outputting an aging end notification when aging of the meat product is completed; and
transmitting the aging end notification to a mobile device (110 or 2401)communicating with the refrigerator (100).

15. A refrigerator (100)comprising:

an aging chamber (102)included in a refrigerating chamber;
a temperature control module (212)configured to control temperature of the aging chamber (102);
a humidity control module (212)configured to control humidity of the aging chamber (102);
a communication module (216);
a memory (218)storing at least one instruction; and
at least one processor (210)connected to the memory (218),
wherein the at least one processor (210)is configured to execute the at least one instruction to:

obtain identification information of meat product,
obtain slaughter date information of the meat, based on the identification information of the meat product,
obtain part information of the meat product,
generate aging information including an aging level for each aging period of the meat product, based on the obtained slaughter date information and the obtained part information,
output the aging information, and
age the meat product at a set temperature and a set humidity.

FIG. 1

## FIG. 2

MEAT INFORMATION SERVER — 120

MEAT DB — 252

PROCESSOR — 254

COMMUNICATION MODULE — 256

NETWORK — 100

REFRIGERATOR — 100

AGING CHAMBER — 102

TEMPERATURE CONTROL MODULE — 212

HUMIDITY CONTROL MODULE — 214

PROCESSOR — 210

COMMUNICATION MODULE — 216

MEMORY — 218

EXTERNAL DEVICE — 110

COMMUNICATION MODULE — 232

INPUT/OUTPUT INTERFACE — 234

PROCESSOR — 230

EP 4 403 857 A1

# FIG. 3

START

OBTAIN IDENTIFICATION INFORMATION OF MEAT FOOD —— S302

OBTAIN SLAUGHTER DATE INFORMATION OF MEAT FOOD —— S304

OBTAIN PART INFORMATION OF MEAT FOOD —— S306

GENERATE AGING INFORMATION OF MEAT FOOD —— S308

OUTPUT AGING INFORMATION —— S310

PERFORM OPERATION OF AGING MEAT FOOD —— S312

END

# FIG. 4

MEAT INFORMATION SERVER — 120

REFRIGERATOR — 100

EXTERNAL DEVICE — 130

OBTAIN IDENTIFICATION INFORMATION OF MEAT FOOD — S402

OBTAIN PART INFORMATION OF MEAT FOOD — S404

TRANSMIT OBTAINED IDENTIFICATION INFORMATION AND OBTAINED PART INFORMATION OF MEAT FOOD — S406

REQUEST MEAT INFORMATION SERVER FOR SLAUGHTER DATE INFORMATION — S408

S410 — TRANSMIT SLAUGHTER DATE INFORMATION

EP 4 403 857 A1

# FIG. 5

MEAT INFORMATION SERVER ⌐120

REFRIGERATOR ⌐100

EXTERNAL DEVICE ⌐130

OBTAIN IDENTIFICATION INFORMATION OF MEAT FOOD — S502

REQUEST MEAT INFORMATION SERVER FOR SLAUGHTER DATE INFORMATION — S504

TRANSMIT SLAUGHTER DATE INFORMATION ⌐S506

OBTAIN PART INFORMATION OF MEAT FOOD — S508

TRANSMIT OBTAINED IDENTIFICATION INFORMATION, OBTAINED SLAUGHTER DATE INFORMATION, AND OBTAINED PART INFORMATION OF MEAT FOOD — S510

EP 4 403 857 A1

# FIG. 6

MEAT INFORMATION SERVER — 120

REFRIGERATOR — 100

OBTAIN IDENTIFICATION INFORMATION OF MEAT FOOD — S602

REQUEST MEAT INFORMATION SERVER FOR SLAUGHTER DATE INFORMATION — S604

TRANSMIT SLAUGHTER DATE INFORMATION — S606

OBTAIN PART INFORMATION OF MEAT FOOD — S608

# FIG. 7

101

714

710

712

Scan the product label of meat food and try custom defrosting, aging, and cooking.

720

Korean beef tenderloin — 722

Domestic Korean beef    For soups
Cold storage at          per 100g (won)
-2/10 °C or less                  2380
                              Weight (g)
9 ‖ 8013450319              286

002047634065 — 724

Please, align the text of a meat packaging label within a rectangle and then press a photographing button. — 726

727

728

730

Confirmation/correction of scan information

| Slaughter date | 2021 | year | 8 | month | 26 | day | — 732 |

| Grade | 2 ▽ | — 734 |

| Part | tenderloin ▽ | — 736 |

OK — 738

EP 4 403 857 A1

# FIG. 8

810

Beef/ Korean beef ✎

What will I do ?
Defrosting

812

Aging and storage of
Korean beef
................... ░

Cooking
...................

☑ Addition to my food list

820

| Meat type | Beef |
| Kind | Korean beef | Other kinds |
| Part | Select ▼ |

Object history
number | ░ 📷

Previous    Next

824  822

830

| Meat type | Beef |
| Kind | Korean beef | Other kinds |
| Part | Sirloin ▼ |

Object history
number | 002047604065 📷

Previous    Next

832

840

Korean beef object history number
002047634065 ✎

Start dry aging
................... ░        842

Start wet aging
................... ░        844

HAVE ALL
PIECES OF ESSENTIAL
INFORMATION NECESSARY FOR
KOREAN BEEF AGING MODE
BEEN RECOGNIZED ?        814

NO

YES

The refrigerator has started meat dry aging.
After unpacking the meat, place it on a
multi-pantry wire rack.
OK

852

The refrigerator has started meat wet aging.
Please, put the vacuum-packed meat in a
multi-pantry.
OK

854

EP 4 403 857 A1

# FIG. 9

| SHEAR FORCE (SF) RANGE | DEGREE OF SOFTNESS |
|---|---|
| SF > 6.5kg | VERY TOUGH |
| 5kg < SF ≤ 6.5kg | TOUGH |
| 4kg < SF ≤ 5kg | NORMAL |
| 3kg < SF ≤ 4kg | SOFT |
| SF ≤ 3kg | VERY SOFT |

# FIG. 10

EP 4 403 857 A1

# FIG. 11

# FIG. 12

EP 4 403 857 A1

PROCESSOR 210

AGING DATE

COEFFICIENT DETERMINATION PROCESS 1210

PART →

COEFFICIENT SET →

AGING LEVEL PREDICTION PROCESS 1220

$$y=(a-b)e^{(-c*x)}+d$$ 1222

AGING DATE AGING LEVEL VALUE →

POST-PROCESSOR 1230

AGING DATE AGING LEVEL

MEMORY 218

| PART | a | b | c | d |
|------|-----|-----|-----|-----|
| SIRLOIN | a1 | b1 | c1 | d1 |
| TENDERLOIN | a2 | b2 | c2 | d2 |
| FLANK | a3 | b3 | c3 | d3 |

1240

EP 4 403 857 A1

FIG. 13

| DISPLAY OF AGING STAGE FOR EACH AGING PERIOD | |
|---|---|
| AGING DATE | AGING LEVEL |
| 21.8/26~21.9/2 | ☆ |
| 21.9/3~21.9/9 | ☆☆ |
| 21.9/10~21.9/16 | ☆☆☆ |

# FIG. 14

| RECOMMENDATION OF RECIPE FOR EACH AGING PERIOD (TBD) | | | |
|---|---|---|---|
| AGING DATE | STEAK | GRILLED | SOUP |
| 21.8/26~21.9/2 | ☆☆ | ☆☆ | ☆ |
| 21.9/3~21.9/9 | ☆☆ | ☆☆☆ | ☆ |
| 21.9/10~21.9/16 | ☆☆☆ | ☆☆☆ | ☆☆ |

# FIG. 15

EP 4 403 857 A1

**1510**

**1514**
[Guide within aging recommendation period]
① (STAGE 1) The meat has been aged with
   an alive texture.
② (STAGE 2) The meat has been aged softly.
③ (STAGE 3) The meat has been aged most softly.

**1512**
Aging on day #
The meat has been aged
most softly.

**1516**
RECIPE RECOMMENDATION

**1520**

**1522**
KOREAN BEEF RECIPE (AGING STAGE 3)

**1524**
RECIPES (3)

STEAK

TENDERLOIN PASTA

BULGOGI

**1526**
RECIPE OF
AGING STAGE 1

**1528**
RECIPE OF
AGING STAGE 2

# FIG. 16

IOT SERVER — 1610

AGING INFORMATION ↑ ↓ AGING INFORMATION, RECIPE INFORMATION

NETWORK

AGING INFORMATION

RECIPE INFORMATION

AGING INFORMATION, RECIPE INFORMATION

100

130

1620

# FIG. 17A

# FIG. 17B

1714

COLD AIR PASSAGE DUCT

1715

1730

1702

1722

102

# FIG. 18

1710

AGING CHAMBER CONTROL MODULE

212

TEMPERATURE CONTROL MODULE

1712

TEMPERATURE SENSOR

1714

COLD AIR PASSAGE DUCT

1716

ELECTRIC DAMPER

214

HUMIDITY CONTROL MODULE

1722

BLOWING FAN

1724

HUMIDITY SENSOR

1730

STERILIZATION LAMP

# FIG. 19

1930

1902
1904 } 1910

1920

1940

VACUUM PUMP

# FIG. 20

```
                        ┌─────────┐
                        │  START  │
                        └────┬────┘
                             │
                 ┌───────────▼──────────┐
                 │  SELECT AGING MODE   │──── S2002
                 └───────────┬──────────┘
           SELECT DRY AGING  │  SELECT WET AGING
          ┌──────────────────┴──────────────────┐
          │  S2004                         S2006 │
  ┌───────▼────────────┐           ┌─────────────▼──────┐
  │ TURN ON BLOWING FAN │           │ TURN OFF BLOWING FAN│
  │ AND STERILIZATION   │           │ AND STERILIZATION   │
  │ LAMP                │           │ LAMP                │
  └───────┬─────────────┘           └─────────────┬──────┘
          │                                       │
          └───────────────┬───────────────────────┘
```

HAS SET AGING PERIOD BEEN REACHED ?  — S2008

NO

YES

IS FURTHER AGING TO BE PERFORMED ?  — S2010

YES

NO  — S2012

TERMINATE AGING OPERATION AND OPERATE IN FIXED TEMPERATURE STORAGE MODE

SET ADDITIONAL AGING PERIOD  — S2014

END

## FIG. 21

2110

Let's start Korean beef aging.
You can set a desired aging
completion date.

Start of aging now

Setting of aging completion date

2112

OK          CANCEL

2120

Please, set an aging stage.

Stage 1 (grilled)

Stage 2 (steak, grilled)

Stage 3 (soup, steak, grilled)

OK          CANCEL

2130

Korean beef aging will be conducted
with aging stage 2 (steak, grilled).

Please, select a desired aging
completion date.

2021 year  8 month  26 day

OK          CANCEL

# FIG. 22

START

PERFORM AGING — S2202

HAS AGING OF MEAT FOOD BEEN COMPLETED ? — S2204

NO

YES

OUTPUT AGING END NOTIFICATION — S2206

TRANSMIT AGING END NOTIFICATION TO EXTERNAL DEVICE — S2208

WILL FURTHER AGING BE SELECTED ? — S2210

YES

NO

STORE MEAT FOOD AT FIXED TEMPERATURE — S2212

END

# FIG. 23

# FIG. 24

2400

**MOBILE DEVICE** 2401

INPUT MODULE 2450

SOUND OUTPUT MODULE 2455

DISPLAY MODULE 2460

**MEMORY** 2430
- VOLATILE MEMORY 2432
- NON-VOLATILE MEMORY 2434
  - INTERNAL MEMORY 2436
  - EXTERNAL MEMORY 2438

**PROGRAM** 2440
- APPLICATION 2446
- MIDDLEWARE 2444
- OPERATING SYSTEM 2442

BATTERY 2489

**PROCESSOR** 2420
- MAIN PROCESSOR 2421
- AUXILIARY PROCESSOR 2423

POWER MANAGEMENT MODULE 2488

**COMMUNICATION MODULE** 2490
- WIRELESS COMMUNICATION MODULE 2492
- WIRED COMMUNICATION MODULE 2494

SUBSCRIBER IDENTIFICATION MODULE 2496

ANTENNA MODULE 2497

AUDIO MODULE 2470

SENSOR MODULE 2476

INTERFACE 2477

CONNECTION TERMINAL 2478

HAPTIC MODULE 2479

CAMERA MODULE 2480

SECOND NETWORK 2499

ELECTRONIC DEVICE 2404

FIRST NETWORK 2498

ELECTRONIC DEVICE 2402

SERVER 2408

EP 4 403 857 A1

## INTERNATIONAL SEARCH REPORT

| International application No. |
| --- |
| **PCT/KR2023/000364** |

**A.    CLASSIFICATION OF SUBJECT MATTER**

**F25D 29/00**(2006.01)i; **F25D 23/12**(2006.01)i; **F25D 17/06**(2006.01)i; **A23B 4/037**(2006.01)i; **A23B 4/06**(2006.01)i; **G06Q 10/08**(2012.01)i; **G06Q 50/10**(2012.01)i

According to International Patent Classification (IPC) or to both national classification and IPC

**B.    FIELDS SEARCHED**

Minimum documentation searched (classification system followed by classification symbols)

F25D 29/00(2006.01); F25B 41/00(2006.01); F25B 41/30(2021.01); F25D 23/00(2006.01); G01N 33/12(2006.01); G06Q 10/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도축(slaughter), 식별(identification), 숙성(aging), 인공지능(artificial intelligence), 진공(vacuum)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2017-0079525 A (SAMSUNG ELECTRONICS CO., LTD.) 10 July 2017 (2017-07-10)<br>See paragraphs [0049]-[0178] and figures 1-15. | 1-6,11,12,15 |
| Y | | 7-10,13,14 |
| Y | JP 2021-139894 A (NATIONAL INSTITUTE OF ADVANCED INDUSTRIAL SCIENCE AND TECHNOLOGY et al.) 16 September 2021 (2021-09-16)<br>See paragraphs [0124], [0134] and [0151] and figures 5, 11-13, 17 and 25. | 7 |
| Y | CN 112856921 A (HEFEI HUALING CO., LTD. et al.) 28 May 2021 (2021-05-28)<br>See paragraphs [0115]-[0119] and [0151]-[0160] and figures 6 and 10. | 8-10,14 |
| Y | KR 10-2021-0071342 A (LG ELECTRONICS INC.) 16 June 2021 (2021-06-16)<br>See paragraphs [0068] and [0077] and figures 5-6. | 13 |

☑ Further documents are listed in the continuation of Box C.    ☑ See patent family annex.

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **31 March 2023** | **31 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/000364** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2021-165604 A (TOSHIBA LIFESTYLE PRODUCTS & SERVICES CORP.) 14 October 2021 (2021-10-14)<br>        See paragraph [0050] and figures 1-2A. | 1-15 |

Form PCT/ISA/210 (second sheet) (July 2022)

**INTERNATIONAL SEARCH REPORT**
Information on patent family members

International application No.

**PCT/KR2023/000364**

| Patent document cited in search report | | | Publication date (day/month/year) | Patent family member(s) | | | Publication date (day/month/year) |
|---|---|---|---|---|---|---|---|
| KR | 10-2017-0079525 | A | 10 July 2017 | US | 11596159 | B2 | 07 March 2023 |
| | | | | US | 2019-0008173 | A1 | 10 January 2019 |
| | | | | WO | 2017-116195 | A1 | 06 July 2017 |
| JP | 2021-139894 | A | 16 September 2021 | CN | 115244398 | A | 25 October 2022 |
| | | | | EP | 4116707 | A1 | 11 January 2023 |
| | | | | KR | 10-2022-0150934 | A | 11 November 2022 |
| | | | | TW | 202141037 | A | 01 November 2021 |
| | | | | WO | 2021-177433 | A1 | 10 September 2021 |
| CN | 112856921 | A | 28 May 2021 | None | | | |
| KR | 10-2021-0071342 | A | 16 June 2021 | None | | | |
| JP | 2021-165604 | A | 14 October 2021 | None | | | |

Form PCT/ISA/210 (patent family annex) (July 2022)